# EUROPEAN PATENT SPECIFICATION

(11) **EP 2 216 297 B1**
(45) Date of publication and mention of the grant of the patent: **04.12.2013**
(21) Application number: 08835948.4
(22) Date of filing: 03.10.2008
(51) Int. Cl.: C01G 41/02

(54) **MODIFIED METAL-OXIDE COMPOSITE SOL, COATING COMPOSITION, AND OPTICAL MEMBER**
MODIFIZIERTES METALLOXID-MISCHSOL, BESCHICHTUNGSZUSAMMENSETZUNG UND OPTISCHES ELEMENT
SOL COMPOSITE D'OXYDE MÉTALLIQUE MODIFIÉ, COMPOSITION DE REVÊTEMENT ET ÉLÉMENT OPTIQUE

(30) Priority: 03.10.2007 JP 2007260150; 03.10.2007 JP 2007260151; 22.08.2008 JP 2008213905
(43) Date of publication of application: 11.08.2010
(73) Proprietor: Nissan Chemical Industries, Ltd., Chiyoda-ku, Tokyo 101-0054 (JP)
(72) Inventor: KOYAMA, Yoshinari, Sodegaura-shi Chiba 299-0266 (JP); ASADA, Motoko, Sodegaura-shi Chiba 299-0266 (JP)
(74) Representative: HOFFMANN EITLE
(86) International application number: PCT/JP2008/068086
(87) International publication number: WO 2009/044878

(56) References cited:
- EP-A2- 1 586 538
- JP-A- 10 310 429
- JP-A- 53 111 336
- JP-A- 2000 063 119
- JP-A- 2001 122 621
- JP-A- 2001 123 115
- JP-A- 2002 363 442
- JP-A- 2005 231 935
- JP-A- 2005 263 854

## Description

### TECHNICAL FIELD

The present invention relates to modified metal oxide composite colloidal particles that include titanium oxide-tin oxide-zirconium oxide-tungsten oxide composite colloidal particles (A) having a primary particle diameter of 2 to 50 nm and having a SnO₂/TiO₂ molar ratio of 0.1 to 1.0, a ZrO₂/TiO₂ molar ratio of 0.1 to 0.4, and a WO₃/TiO₂ molar ratio of 0.03 to 0.15, as cores, and tungsten oxide-tin oxide-silicon dioxide composite colloidal particles (B) having a primary particle diameter of 1 to 7 nm with which the surface of each of the cores is coated; and a sol in which the modified metal oxide composite colloidal particles are dispersed in water and/or an organic solvent.
Furthermore, the present invention relates to a coating composition and an optical member in which a coated article has excellent hot water resistance and further has weather resistance and light resistance that are not lowered even when the coated article is further coated with a deposited film of an inorganic oxide (such as an antireflection film), and, in particular, discoloration of the coated article caused by ultraviolet rays is almost completely inhibited.
The composite colloidal particles of the present invention are used for various applications such as a hard coating film and an antireflection film for the surfaces of plastic lenses and various display devices such as liquid crystal displays and plasma displays. In addition, the sol in which the composite colloidal particles of the present invention are dispersed is suitably used for such coating compositions.

### BACKGROUND ART

Recently, in order to improve a surface of a plastic lens, a metal oxide sol having a high refractive index has been used as a component of a hard coating film applied on lens substrates. A representative example of the metal oxide having a high refractive index is titanium oxide. Examples of the metal oxide sol having a high refractive index include a titanium oxide-tin oxide-zirconium oxide composite sol (see Patent Document 1), a composite sol in which a titanium oxide-tin oxide-zirconium oxide composite sol is coated with antimony pentoxide colloid (see Patent Document 2), and a sol of composite oxide particles in which an intermediate layer including silica and zirconia is formed between a core particle containing titanium oxide and a coating layer of antimony oxide (see Patent Document 3).

In addition, titanium oxide is known to have a photocatalytic effect. That is, titanium oxide is readily excited by radiation of rays such as ultraviolet rays to exhibit redox behavior, for example, to degrade organic compounds. Moreover, the photocatalytic activity is enhanced when titanium oxide contains tungsten oxide at a specific ratio (see Patent Document 4).

Moreover, plastic molded articles are used widely by utilizing advantages such as lightweight, easy moldability, and high impact resistance. Conversely, the plastic molded articles have disadvantages such as being easily scratched due to insufficient hardness, being easily affected by a solvent, absorbing dusts by electrostatic charge, and having insufficient heat resistance. Thus, the plastic molded articles have insufficient property for practical use such as glasses lenses and window materials as compared with inorganic glass molded articles. Consequently, applications of a protective coating to plastic molded articles have been developed. Much variety of coating compositions is developed for the coating.

A coating composition containing an organic silicon compound or a hydrolysate thereof as a main component (resin component or coating film-forming component) is used for glasses lenses for providing a hard coating whose hardness is close to that of an inorganic coating (see Patent Document 5).
Because the above coating composition still has insufficient scratch resistance, a composition to which a colloidally dispersed silicon dioxide sol is further added has been developed and is also put into practical use for glasses lenses (see Patent Document 6).

Meanwhile, conventionally, a large part of plastic glasses lenses have been produced by cast polymerization using a monomer called diethylene glycol bis(allyl carbonate). These lenses have a refractive index of about 1.50 lower than a refractive index of glass lenses of 1.52, and thus plastic lenses have a disadvantage of having a thicker edge for nearsightedness lenses. Therefore, recently, a monomer having a refractive index higher than that of diethylene glycol bis(allyl carbonate) has been developed, and resin materials having a high refractive index have been developed (see Patent Documents 7 and 8).
With respect to such resin lenses having a high refractive index, a method using a colloidal dispersion of metal oxide fine particles of Sb and Ti as a coating material has also been developed (see Patent Documents 9 and 10).
Furthemore, a coating composition including a silane coupling agent and a stable modified metal oxide sol is disclosed. The sol contains 2 to 50% by weight of particles (C) calculated as metal oxides. The particles (C) have a primary particle diameter of 2 to 100 nm and include metal oxide colloidal particles (A) having a primary particle diameter of 2 to 60 nm, as cores, and a coating material (B) composed of acidic oxide colloidal particles with which the surface of each of the cores is coated. A modified titanium oxide-zirconium oxide-tin oxide composite colloid coated with alkylamine-containing antimony pentoxide is disclosed as a specific example of the colloidal particles to be used (see Patent Document 11).
Patent Document 1
   Japanese Patent Application Publication No. JP-A-10-310429
Patent Document 2
   Japanese Patent Application Publication No. JP-A-2001-122621
Patent Document 3
   Japanese Patent Application Publication No. JP-A-2002-363442
Patent Document 4
   Japanese Patent Application Publication No. JP-A-2005-231935
Patent Document 5
   Japanese Patent Application Publication No. JP-A-52-11261
Patent Document 6
   Japanese Patent Application Publication No. JP-A-53-111336
Patent Document 7
   Japanese Patent Application Publication No. JP-A-55-13747
Patent Document 8
   Japanese Patent Application Publication No. JP-A-64-54021
Patent Document 9
   Japanese Patent Application Publication No. JP-A-62-151801
Patent Document 10
   Japanese Patent Application Publication No. JP-A-63-275682
Patent Document 11
   Japanese Patent Application Publication No. JP-A-2001-123115

### DISCLOSURE OF THE INVENTION

### Problem to be Solved by the Invention

When titanium oxide-containing colloidal particles are used as a component of a hard coating film applied on plastic lens substrates, due to the photocatalytic effect derived from titanium oxide, an organic compound as a binder may be decomposed to lower the strength of the hard coating film, to cause stain due to the decomposition of an organic substance, or to discolor the titanium oxide-containing colloidal particles themselves. It is disadvantageous to the plastic lenses for eyeglasses that require a colorless transparent coating. Thus, it has been an object to suppress the photocatalytic effect of the titanium oxide-containing colloidal particles and the discoloration of the colloidal particles themselves. For example. Patent Documents 1 and 2 disclose that the discoloration of titanium oxide and tin oxide caused by ultraviolet rays is inhibited by complexing titanium oxide, tin oxide, and zirconium oxide, but the inhibition effect on the discoloration is insufficient. Furthermore, Patent Document 3 discloses that an intermediate thin film layer including silicon dioxide and zirconium oxide is provided between a core particle containing titanium oxide and a coating layer of antimony oxide, and thus it is intended to inhibit the activation of the titanium oxide-containing core particles by rays. However, the effect is insufficient. In addition, the method is inefficient because at least two or more coating layers are required, and thus the fabrication process becomes complicated.

### Means for Solving the Problem

The present inventors have carried out intensive studies on the method for inhibiting the photocatalytic activity of the titanium oxide-containing colloidal particles, and as a result, have found that when oxide composite colloidal particles including a combination of titanium oxide, tin oxide, and zirconium oxide in a particular range are further complexed with tungsten oxide at a particular ratio to produce composite colloidal particles, then the obtained composite colloidal particles are used as cores, and a surface of each of the cores is coated with composite colloidal particles including a combination of tungsten oxide, tin oxide, and silicon dioxide, surprisingly, discoloration of the colloidal particles by photoexcitation is almost completely inhibited. Thus, the inventors have found that a sol of modified metal oxide composite colloidal particles including titanium oxide having a high refractive index and excellent light resistance and weather resistance, and a coating composition and optical member containing the colloidal particles can be provided, and accomplished the present invention. As described in Patent Document 4, heretofore, a phenomenon has been known that the photocatalytic activity is enhanced by complexing titanium oxide with tungsten oxide alone, which is not preferable in the present invention. Therefore, the finding is considered to be surprisingly advantageous because the effect opposite to the phenomenon is achieved.
Specifically, according to a first aspect of the present invention, a modified metal oxide composite colloidal particle comprises: a titanium oxide-tin oxide-zirconium oxide-tungsten oxide composite colloidal particle (A) having a primary particle diameter of 2 to 50 nm and having a SnO₂/TiO₂ molar ratio of 0.1 to 1.0, a ZrO₂/TiO₂ molar ratio of 0.1 to 0.4, and a WO₃/TiO₂ molar ratio of 0.03 to 0.15, as a core; and a tungsten oxide-tin oxide-silicon dioxide composite colloidal particle (B) having a primary particle diameter of 1 to 7 nm with which a surface of the core is coated.
According to a second aspect, in the modified metal oxide composite colloidal particle according to the first aspect, a mass ratio of the colloidal particle (B) with respect to the colloidal particle (A) is 0.01 to 0.5.
According to a third aspect, in the modified metal oxide composite colloidal particle according to the first aspect or the second aspect, a mass ratio of tungsten oxide (WO₃), tin oxide (SnO₂), and silicon dioxide (SiO₂) in the colloidal particle (B) is a mass ratio of WO₃/SnO₂ of 0.1 to 100 and a mass ratio of SiO₂/SnO₂ of 0.1 to 100.
According to a fourth aspect, in the modified metal oxide composite colloidal particle according to the first aspect or the second aspect, the colloidal particle (A) further includes oxide of at least one metal M selected from a group consisting of iron, copper, zinc, yttrium, niobium, molybdenum, indium, antimony, tantalum, lead, bismuth, and cerium at an M/TiO₂ molar ratio of 0.01 to 0.1.
According to a fifth aspect, a modified metal oxide composite colloidal particle dispersion sol includes the modified metal oxide composite colloidal particle according to any one of the first aspect to the fourth aspect dispersed in water and/or an organic solvent.
According to a sixth aspect, a coating composition includes Component (S) and Component (T1). Component (S) is at least one silicon-containing substance selected from a group consisting of an organic silicon compound of General Formula (I):

(R¹)ₐ(R³)_{b}Si(OR²)_{4-(a+b)} (I)

(where each of R¹ and R³ is an alkyl group, an aryl group, a halogenated alkyl group, a halogenated aryl group, an alkenyl group, or an organic group having an epoxy group, an acryloyl group, a methacryloyl group, a mercapto group, an amino group, or a cyano group and bonded to a silicon atom through a Si-C bond, R² is a C₁₋₈ alkyl group, an alkoxyalkyl group, or an acyl group, each of a and b is an integer of 0, 1, or 2, and a+b is an integer of 0, 1, or 2) and General Formula (II):

[(R⁴)_{c}Si(OX)_{3-c}]₂Y (II)

(where R⁴ is a C₁₋₅ alkyl group, X is a C₁₋₄ alkyl group or an acyl group, Y is a methylene group or a C₂₋₂₀, alkylene group, and c is an integer of 0 or 1) and a hydrolysate of the silicon-containing substance, and Component (T1) is a modified metal oxide composite colloidal particle comprising a titanium oxide-tin oxide-zirconium oxide-tungsten oxide composite colloidal particle (A) having a primary particle diameter of 2 to 50 nm and having a SnO₂/TiO₂ molar ratio of 0.1 to 1.0, a ZrO₂/TiO₂ molar ratio of 0.1 to 0.4, and a WO₃/TiO₂ molar ratio of 0.03 to 0.15, as a core, and a tungsten oxide-tin oxide-silicon dioxide composite colloidal particle (B) having a primary particle diameter of 1 to 7 nm with which the surface of the core is coated.
According to a seventh aspect, in the coating composition according to the sixth aspect, a mass ratio of the colloidal particle (B) with respect to the colloidal particle (A) is 0.01 to 0.5 in the modified metal oxide composite colloidal particle.
According to an eighth aspect, in the coating composition according to the sixth aspect or the seventh aspect, a mass ratio of tungsten oxide (WO₃), tin oxide (SnO₂), and silicon dioxide (SiO₂) in the colloidal particle (B) is a mass ratio of WO₃/SnO₂ of 0.1 to 100 and a mass ratio of SiO₂/SnO₂ of 0.1 to 100 in the modified metal oxide composite colloidal particle.
According to a ninth aspect, in the coating composition according to the sixth aspect or the seventh aspect, the colloidal particle (A) further includes oxide of at least one metal M selected from a group consisting of iron, copper, zinc, yttrium, niobium, molybdenum, indium, antimony, tantalum, lead, bismuth, and cerium at an M/TiO₂ molar ratio of 0.01 to 0.1 in the modified metal oxide composite colloidal particle.
According to a tenth aspect, the coating composition according to the sixth aspect or the seventh aspect further includes at least one curing catalyst selected from a group consisting of a metal salt, a metal alkoxide, and a metal chelate compound.
According to an eleventh aspect, an optical member has a cured film formed on a surface of an optical substrate from the coating composition according to any one of the sixth aspect to the tenth aspect.
According to a twelfth aspect, the optical member according to the eleventh aspect further has an antireflection film on a surface of the optical member.

### Effects of the Invention

When the modified metal oxide composite colloidal particles of the present invention are used for a hard coating film applied to plastic lens substrates and the like, the colloidal particles have a high refractive index, good dispersibility, high transparency because of the colloidal particles are microparticles, and no discoloration by ultraviolet irradiation, and therefore are effective for improving weather resistance, light resistance, moisture resistance, water resistance, abrasion resistance, long-term stability, and the like of the coating film.
Furthermore, the modified metal oxide composite colloidal particles of the present invention can also be effectively used for a hard coating film or an antireflection film of various display devices, such as a liquid crystal display and a plasma display, because of the above characteristics. In addition, the modified metal oxide composite colloidal particles can be effectively used as a surface treating agent for metal materials, ceramic materials, glass materials, plastic materials, and the like.
Moreover, a sol in which the modified metal oxide composite colloidal particles of the present invention are dispersed can be well dispersed in various resin compositions, and therefore are suitably used for a coating composition for the hard coating and the like.
A cured film obtained from the coating composition of the present invention provides a coating layer that has scratch resistance, surface hardness, abrasion resistance, transparency, heat resistance, light resistance, and weather resistance, and in which discoloration by ultraviolet irradiation is especially almost completely inhibited. In addition, the cured film has good adhesive properties with respect to an antireflection film (such as inorganic oxides and fluorides), a deposited metal film, and the like formed on the coating layer.
The optical member of the present invention has excellent scratch resistance, surface hardness, abrasion resistance, transparency, heat resistance, light resistance, weather resistance, and especially water resistance. Moreover, the optical member has high transparency and good appearance as well as no interference fringes even when the optical member is applied to a high refractive index member having a refractive index of 1.54 or more.
An optical member having a cured film made of the coating composition of the present invention may be used for glasses lenses as well as various articles such as camera lenses, windshields of automobiles, optical filters for a liquid crystal display and a plasma display.

### BEST MODES FOR CARRYING OUT THE INVENTION

The modified metal oxide composite colloidal particles of the present invention are modified metal oxide composite colloidal particles including titanium oxide-tin oxide-zirconium oxide-tungsten oxide composite colloidal particles (A) having a primary particle diameter of 2 to 50 nm and having a SnO₂/TiO₂ molar ratio of 0.1 to 1.0, a ZrO₂/TiO₂ molar ratio of 0.1 to 0.4, and a WO₃/TiO₂ molar ratio of 0.03 to 0.15, as cores, and tungsten oxide-tin oxide-silicon dioxide composite colloidal particles (B) having a primary particle diameter of 1 to 7 nm with which the surface of each of the cores is coated. The titanium oxide-tin oxide-zirconium oxide-tungsten oxide composite colloidal particles (A) serving as cores are colloidal particles in which titanium oxide, tin oxide, zirconium oxide, and tungsten oxide as the structural components are uniformly complexed (made into a solid solution) at the atom level.
When tungsten oxide is complexed with composite oxide colloidal particles of titanium oxide, tin oxide, and zirconium oxide at a particular ratio, the discoloration of the colloidal particles due to the photoexcitation derived from titanium oxide can be almost completely inhibited. The ratio of tungsten oxide to be complexed can be shown by the molar ratio to titanium oxide and is a WO₃/TiO₂ molar ratio of 0.01 to 0.15. A WO₃/TiO₂ molar ratio lower than 0.01 or higher than 0.15 is not preferable, because the titanium oxide-tin oxide-zirconium oxide-tungsten oxide composite colloidal particles turn yellow to orange due to the photoexcitation by ultraviolet rays. Each of tin oxide and zirconium oxide has the effect to inhibit the photoexcitation of titanium oxide by ultraviolet rays, and is complexed at a SnO₂/TiO₂ molar ratio of 0.1 to 1.0 and a ZrO₂/TiO₂ molar ratio of 0.1 to 0.4. A lower SnO₂/TiO₂ molar ratio than 0.1 is not preferable, because the inhibition effect on the photoexcitation of titanium oxide by ultraviolet rays is insufficient. Also, a higher molar ratio than 1.0 is not preferable, because the refractive index of the composite colloidal particles is lowered. A lower ZrO₂/TiO₂ molar ratio than 0.1 is not preferable, because the inhibition effect on the photoexcitation of titanium oxide by ultraviolet rays is insufficient. Also, a higher molar ratio than 0.4 is not preferable, because the refractive index of the composite colloidal particles is lowered.

Furthermore, in the modified metal oxide composite colloidal particles of the present invention, the titanium oxide-tin oxide-zirconium oxide-tungsten oxide composite colloidal particles (A) serving as cores may contain at least one metal M selected from a group consisting of iron, copper, zinc, yttrium, niobium, molybdenum, indium, antimony, tantalum, lead, bismuth, and cerium, as an oxide, as long as the object of the present invention is achieved. Examples of the composite colloidal particles include titanium oxide-tin oxide-zirconium oxide-tungsten oxide-iron oxide composite colloidal particles, titanium oxide-tin oxide-zirconium oxide-tungsten oxide-zinc oxide composite colloidal particles, titanium oxide-tin oxide-zirconium oxide-tungsten oxide-antimony oxide composite colloidal particles, and titanium oxide-tin oxide-zirconium oxide-tungsten oxide-cerium oxide composite colloidal particles. In addition, the content of the metal M is preferably an M/TiO₂ molar ratio of 0.01 to 0.1.

In the modified metal oxide composite colloidal particles of the present invention, the titanium oxide-tin oxide-zirconium oxide-tungsten oxide composite colloidal particles (A) serving as cores have a primary particle diameter of 2 to 50 nm and preferably 2 to 30 nm. In the colloidal particles (A), a smaller primary particle diameter than 2 nm is not preferable, because, when a coating containing the composite colloidal particles is formed on a substrate, the coating hardness is insufficient to lower scratch resistance and abrasion resistance. Furthermore, a larger primary particle diameter than 50 nm is not preferable, because the obtained coating has lower transparency.

Furthermore, in the modified metal oxide composite colloidal particles of the present invention, the colloidal particles (B) for coating surfaces of the colloidal particles (A) are tungsten oxide-tin oxide-silicon dioxide composite colloidal particles having a primary particle diameter of 1 to 7 nm, and in the colloidal particles, tungsten oxide, tin oxide, and silicon dioxide are uniformly complexed (i.e., a solid solution) at the atom level.
In the present invention, unless otherwise stated, the term "primary particle diameter" means the particle diameter of a single particle in colloidal particles observed under a transmission electron microscope.

In the modified metal oxide composite colloidal particles of the present invention, the mass ratio of the titanium oxide-tin oxide-zirconium oxide-tungsten oxide composite colloidal particles (A) serving as cores and the tungsten oxide-tin oxide-silicon dioxide composite colloidal particles (B) is a mass ratio of the colloidal particles (B) to the colloidal particles (A) of 0.01 to 0.5. When the mass ratio is less than 0.01, obtained modified metal oxide composite colloidal particles have poor dispersibility with respect to organic solvent and thus, it is difficult to produce a stable organic solvent dispersion sol. Furthermore, a higher mass ratio than 0.50 is inefficient, because obtained modified metal oxide composite colloidal particles have no further improvement effect on the dispersibility to organic solvents.
In the colloidal particles (B), the mass ratio of tungsten oxide (WO₃), tin oxide (SnO₂), and silicon dioxide(SiO₂) is a WO₃/SnO₂ ratio of 0.1 to 100 and a SiO₂/SnO₂ ratio of 0.1 to 100.

In the modified metal oxide composite colloidal particles of the present invention, because the colloidal particles (B) are chemically strongly bonded to the surfaces of the colloidal particles (A) not by simple physical adsorption, the colloidal particles (B) are not removed from the colloidal particles (A) by strong stirring, solvent replacement, concentration by ultrafiltration, washing, or the like.
The refractive index of the modified metal oxide composite colloidal particles of the present invention varies depending on the composition of the colloidal particles and the crystal state of the colloidal particles but is in a range of about 1.9 to 2.4.
The modified metal oxide composite colloidal particles of the present invention can be made into a sol by dispersing them in water and/or an organic solvent.
The modified metal oxide composite colloidal particle dispersion sol in which the modified metal oxide composite colloidal particles of the present invention are dispersed in water and/or an organic solvent has a solid concentration of 0.1 to 50% by mass and preferably 1 to 30% by mass as total metal oxides. A lower solid concentration than 0.1 % by mass is not preferable, because a coating composition that is obtained by mixing with other components has an excessively low concentration. Furthermore, when the solid concentration is higher than 50% by mass, the sol may have insufficient stability.
When the modified metal oxide composite colloidal particle dispersion sol of the present invention is an organic solvent sol or a mixed solvent sol of water and an organic solvent, specific examples of the organic solvent to be used include alcohols such as methanol, ethanol, isopropanol, and n-propanol, linear amides such as dimethylformamide and N,N-dimethylacetamide, cyclic amides such as N-methyl-2-pyrrolidone, glycols such as methyl cellosolve, ethyl cellosolve, and ethylene glycol, esters such as methyl acetate, ethyl acetate, and butyl acetate, ethers such as dimethyl ether, methyl ethyl ether, and tetrahydrofuran, ketones such as acetone, methyl ethyl ketone, and methyl isobutyl ketone, and aromatic hydrocarbons such as toluene and xylene. These organic solvents may be used alone or in combination of two or more.
When the modified metal oxide composite colloidal particle dispersion sol of the present invention is an organic solvent sol or a mixed solvent sol of water and an organic solvent, the organic solvent sol or the mixed solvent sol can be obtained by solvent replacement in which water in the sol of the present invention containing water as a dispersion medium (aqueous sol) is replaced by a usual method such as an evaporation method or an ultrafiltration method.
In the case that the organic solvent to be used is a hydrophobic solvent such as the above ethers, ketones, or aromatic hydrocarbons, when, prior to the solvent replacement, the surfaces of the modified metal oxide composite colloidal particles of the present invention are hydrophobic-treated with a silane coupling agent, a silylation agent, various surfactants, or the like, the solvent can be readily replaced.

The modified metal oxide composite colloidal particles of the present invention can be produced by a known method such as an ion exchange method, a peptization method, a hydrolysis method, or a reaction method. Examples of usable raw materials include a water soluble salt, a metal alkoxide, and powder of a metal of each constituent. Examples of the raw material for the titanium oxide component include titanium tetrachloride, titanium sulfate, titanium nitrate, and titanium isopropoxide. Examples of the raw material for the tin oxide component include stannic chloride, sodium stannate, metal tin, tetrabutoxytin, and dibutoxydibutyltin. Examples of the raw material for the zirconium oxide component include zirconium oxychloride, zirconium oxysulfate, zirconium oxynitrate, zirconium oxyacetate, zirconyl carbonate, zirconium ethoxide, zirconium tetraethoxide, and zirconium tetrapropoxide. Examples of the raw material for the tungsten oxide component include tungsten hexachloride, tungsten oxychloride, sodium tungstate, and hexaethoxytungsten.
The titanium oxide-tin oxide-zirconium oxide-tungsten oxide composite colloidal particles (A) serving as cores in the present invention can be produced, for example, by the following method. Titanium tetrachloride, stannic chloride, and zirconyl carbonate are added to pure water at a SnO₂/TiO₂ molar ratio of 0.1 to 1.0 and a ZrO₂/TiO₂ molar ratio of 0.1 to 0.4, and hydrolyzed by heating at about 70 to 100°C to give an aqueous sol of titanium oxide-tin oxide-zirconium oxide composite colloidal particles. To the aqueous sol of composite colloidal particles, a water soluble salt of at least one metal M selected from a group consisting of iron, copper, zinc, yttrium, niobium, molybdenum, indium, antimony, tantalum, lead, bismuth, and cerium may be further added at an M/TiO₂ molar ratio of 0.01 to 0.1.
To the aqueous sol of titanium oxide-tin oxide-zirconium oxide composite colloidal particles obtained in the above procedure, an alkaline component such as isopropylamine is added and then anion-exchanged to produce an alkali-stable aqueous sol. To the aqueous sol, a tungstic acid oligomer that is separately prepared by cation-exchange of an aqueous solution of sodium tungstate and addition of an alkylamine is added and then hydrothermal treatment is performed on the mixture at about 150 to 300°C to produce an aqueous sol containing the titanium oxide-tin oxide-zirconium oxide-tungsten oxide composite colloidal particles (A) serving as cores in the present invention.

The tungsten oxide-tin oxide-silicon dioxide composite colloidal particles (B) for coating the surfaces of the colloidal particles (A) in the present invention can be produced, for example, by the following method. Sodium tungstate, sodium stannate, and sodium silicate are added to pure water at a WO₃/SnO₂ mass ratio of 0.1 to 100 and a SiO₂/SnO₂ mass ratio of 0.1 to 100, and the solution is passed through a column packed with a hydrogen form cation exchange resin to produce an aqueous sol of the tungsten oxide-tin oxide-silicon dioxide composite colloidal particles (B).
The modified metal oxide composite colloidal particles of the present invention can be obtained by adding the aqueous sol of colloidal particles (B) to the aqueous sol of colloidal particles (A) with stirring to coat the surfaces of the colloidal particles (A) with the colloidal particles (B). Furthermore, the aqueous sol of colloidal particles (A) and the aqueous sol of colloidal particles (B) may be added in the reverse order or may be added alternately.

The modified metal oxide composite colloidal particle dispersion sol in which the modified metal oxide composite colloidal particles of the present invention are dispersed in water and/or an organic solvent may contain an optional component as long as the object of the present invention is achieved.
In particular, when an oxycarboxylic acid is contained in an amount of about 30% by mass or less based on the total mass of metal oxides contained in the sol of the present invention, an obtained sol has further improved dispersibility. Examples of the oxycarboxylic acid to be used include lactic acid, tartaric acid, citric acid, gluconic acid, malic acid, and glycolic acid.
Furthermore, the sol of the present invention may contain an alkaline component in an amount of about 30% by mass or less based on the total mass of metal oxides contained in the sol of the present invention. Examples of the alkaline component include hydroxides of alkali metals such as lithium, sodium, potassium, rubidium, and cesium, alkylamines such as ammonium hydroxide, tetramethylammonium hydroxide, tetraethylammonium hydroxide, ethylamine, triethylamine, isopropylamine, n-propylamine, and diisopropylamine, aralkylamines such as benzylamine, alicyclic amines such as piperidine, and alkanolamines such as monoethanolamine and triethanolamine. These components may be used in combination of two or more.

In General Formula (I):

(R¹)ₐ(R³)_{b}Si(OR²)_{4-(a+b)} (I)

representing an organic silicon compound in Component (S) used in the coating composition of the present invention, R¹ and R³ may be the same organic group or different organic groups, and a and b may be the same integer or different integers.
Examples of the organic silicon compound of General Formula (I) in the Component (S) include tetramethoxysilane, tetraethoxysilane, tetra-n-propoxysilane, tetraisopropoxysilane, tetra-n-butoxysilane, tetraacetoxysilane, methyltrimethoxysilane, methyltripropoxysilane, methyltriacetoxysilane, methyltributoxysilane, methyltripropoxysilane, methyltriamiloxyrsilane, methyltriphenoxysilane, methyltribenzyloxysilane, methyltriphenethyloxysilane, glycidoxymethyltrimethoxysilane, glycidoxymethyltrietlioxysilane, α-glycidoxyethyltrimethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyltrimethoxysilane, α-glycidoxybutyltriethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyciohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, β-(3,4-epoxycyclohexyl)ethyltriphenoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, δ-(3,4-epoxycyclohexyl)butyltriethoxysilane, glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylethyldimethoxysilane, α-glycidoxypropylmethyldimethoxysilane, α-glycidoxypropylmethyldiethoxysilane, β-glycidoxypropyimethyldimethoxysilane, β-glycidoxypropylethyldimethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ-glycidoxypropylethyldiethoxysilane, γ-glycidoxypropylvinyldimethoxysilane, γ-glycidoxypropylvinyldiethoxysilane, ethyltrimethoxysilane, ethyltriethoxysilane, vinyltrimethoxysilane, vinyltriethoxysilane, vinyltriacetoxysilane, phenyltrimethoxysilane, phenyltriethoxysilane, phenyltriacetoxysilane, γ-chloropropyltrimethoxysilane, γ-chloropropyltriethoxysilane, γ-chloropropyltriacetoxysilane, 3,3,3-trifluoropropyltrimethoxysilane, γ-methacryloxypropyltrimethoxysilane, γ-mercaptopropyltrimethoxysilane, γ-mercaptopropyltriethoxysilane, β-cyanoethyltriethoxysilane, chloromethyltrimethoxysilane, chloromethyltriethoxysilane, N-(β-aminoethyl)γ-aminopropyltrimethoxysilane, N-(β-aminoethyl)γ-aminopropylmethyldimethoxysilane, γ-aminopropylmethyldimethoxysilane, N-(β-aminoethyl)γ-aminopropyltriethoxysilane, N-(β-aminoethyl)γ-aminopropylmethyldiethoxysilane, dimethyldimethoxysilane, phenylmethyldimethoxysilane, dimethyldiethoxysilane, phenylmethyldiethoxysilane, γ-chloropropylmethyldimethoxysilane, γ-chloropropylmethyldiethoxysilane, dimethyldiacetoxysilane, γ-methacryloxypropylmethyldimethoxysilane, γ-methacryloxypropylmethyldiethoxysilane, γ-mercaptopropylmethyldimethoxysilane, γ-mercaptomethyldiethoxysilane, methylvinyldimethoxysilane, and methylvinyldiethoxysilane. These compounds may be used alone or in combination of two or more.
Furthermore, a hydrolysate of the organic silicon compound of General Formula (I) in Component (S) used in the coating composition of the present invention is the compound of General Formula (I) where a part of or all of R²s are substituted with hydrogen atoms by hydrolysis of the organic silicon compound of General Formula (I). These hydrolysates of organic silicon compounds of General Formula (I) may be used alone or in combination of two or more. The hydrolysis is performed by adding an acidic aqueous solution such as a hydrochloric acid aqueous solution, a sulfuric acid aqueous solution, or an acetic acid aqueous solution into the organic silicon compound and then stirring the mixture.

Examples of the organic silicon compound of General Formula (II):

[(R⁴)_{c}Si(OX)_{3-c}]₂Y (II)

in Component (S) used in the coating composition of the present invention include methylenebis(methyldimethoxysilane), ethylenebis(ethyldimethoxysilane), propylenebis(ethyldiethoxysilane), and butylenebis(methyldiethoxysilane). These compounds may be used alone or in combination of two or more.
Furthermore, a hydrolysate of the organic silicon compound of General Formula (II) in Component (S) used in the coating composition of the present invention is the compound of General Formula (II) where a part of or all of Xs are substituted with hydrogen atoms by hydrolysis of the organic silicon compound of General Formula (II). These hydrolysates of organic silicon compounds of General Formula (II) may be used alone or in combination of two or more. The hydrolysis is performed by adding an acidic aqueous solution such as a hydrochloric acid aqueous solution, a sulfuric acid aqueous solution, or an acetic acid aqueous solution into the organic silicon compound and then stirring the mixture.
Component (S) used in the coating composition of the present invention is at least one silicon-containing compound selected from a group consisting of organic silicon compounds of General Formula (I) and General Formula (II) and hydrolysates thereof.

Component (S) used in the coating composition of the present invention is preferably at least one silicon-containing compound selected from a group consisting of organic silicon compounds of General Formula (I) and hydrolysates thereof. In particular, the silicon-containing compound is preferably an organic silicon compound of General Formula (I) where either R¹ or R³ is an organic group having an epoxy group, R² is an alkyl group, each of a and b is 0 or 1, and a+b is 1 or 2, or a hydrolysate thereof. Preferred examples of the organic silicon compound include glycidoxymethyltrimethoxysilane, glycidoxymethyltriethoxysilane, α-glycidoxyethyltrimethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyltrimethoxysilane, α-glycidoxybutyltriethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylethyldimethoxysilane, α-glycidoxypropylmethyldimethoxysilane, α-glycidoxypropylmethyldiethoxysilane, β-glycidoxypropylmethyldimethoxysilane, β-glycidoxypropylethyldimethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ-glycidoxypropylethyldiethoxysilane, γ-glycidoxypropylvinyldimethoxysilane, and γ-glycidoxypropylvinyldiethoxysilane.
More preferable are γ-glycidoxypropyltrimethoxysilane, γ-glycidoxypropylmethyldiethoxysilane γ-glycidoxypropylmethyldimethoxysilane, and hydrolysates thereof. These compounds may be used alone or as a mixture thereof. In addition, γ-glycidoxypropyltrimethoxysilane, γ-glycidoxypropylmethyldiethoxysilane, γ-glycidoxypropylmethyldimethoxysilane, or hydrolysates thereof may be used in combination with a tetrafunctional compound of General Formula (I) where a+b=0. Examples of the tetrafunctional compound include tetramethoxysilane, tetraethoxysilane, tetraisopropoxysilane, tetra-n-propoxysilane, tetra-n-butoxysilane, tetra-tert-butoxysilane, and tetra-sec-butoxysilane.

As composite colloidal particles used in Component (T1) of the coating composition of the present invention, the following composite colloidal particles may be used.
Component (T1) of the coating composition of the present invention is modified metal oxide composite colloidal particles including titanium oxide-tin oxide-zirconium oxide-tungsten oxide composite colloidal particles (A) having a primary particle diameter of 2 to 50 nm and having a SnO₂/TiO₂ molar ratio of 0.1 to 1.0, a ZrO₂/TiO₂ molar ratio of 0.1 to 0.4, and a WO₃/TiO₂ molar ratio of 0.03 to 0.15, as cores, and tungsten oxide-tin oxide-silicon dioxide composite colloidal particles (B) having a primary particle diameter of 1 to 7 nm with which the surface of each of the cores is coated. The colloidal particles (A) serving as cores are colloidal particles in which titanium oxide, tin oxide, zirconium oxide, and tungsten oxide as the structural components are uniformly complexed (i.e., a solid solution) at the atom level.
When tungsten oxide is complexed with composite oxide colloidal particles of titanium oxide, tin oxide, and zirconium oxide at a particular ratio, the discoloration of the colloidal particles due to the photoexcitation derived from titanium oxide can be almost completely inhibited. The ratio of tungsten oxide to be complexed can be shown by the molar ratio to titanium oxide and is a WO₃/TiO₂ molar ratio of 0.01 to 0.15. A WO₃/TiO₂ molar ratio lower than 0.01 or higher than 0.15 is not preferable, because the titanium oxide-tin oxide-zirconium oxide-tungsten oxide composite colloidal particles turn yellow to orange due to the photoexcitation by ultraviolet rays. Each of tin oxide and zirconium oxide has the effect to inhibit the photoexcitation of titanium oxide caused by ultraviolet rays, and is complexed at a SnO₂/TiO₂ molar ratio of 0.1 to 1.0 and a ZrO₂/TiO₂ molar ratio of 0.1 to 0.4. A lower SnO₂/TiO₂ molar ratio than 0.1 is not preferable, because the inhibition effect on the photoexcitation of titanium oxide caused by ultraviolet rays is insufficient. Also, a higher molar ratio than 1.0 is not preferable, because the refractive index of the composite colloidal particles is lowered. A lower ZrO₂/TiO₂ molar ratio than 0.1 is not preferable, because the inhibition effect on the photoexcitation of titanium oxide caused by ultraviolet rays is insufficient. Also, a higher molar ratio than 0.4 is not preferable, because the refractive index of the composite colloidal particles is lowered.

Furthermore, in the modified metal oxide composite colloidal particles used in Component (T1) of the coating composition of the present invention, the colloidal particles (A) serving as cores may contain at least one metal M selected from a group consisting of iron, copper, zinc, yttrium, niobium, molybdenum, indium, antimony, tantalum, lead, bismuth, and cerium, as an oxide, as long as the object of the present invention is achieved. Examples of the composite colloidal particles include titanium oxide-tin oxide-zirconium oxide-tungsten oxide-iron oxide composite colloidal particles, titanium oxide-tin oxide-zirconium oxide-tungsten oxide-zinc oxide composite colloidal particles, titanium oxide-tin oxide-zirconium oxide-tungsten oxide-antimony oxide composite colloidal particles, and titanium oxide-tin oxide-zirconium oxide-tungsten oxide-cerium oxide composite colloidal particles. In addition, the content of the metal M is preferably an M/TiO₂ molar ratio of 0.01 to 0.1. When an oxide of the metal M is additionally contained, the modified metal oxide composite colloidal particles used in Component (T1) improve control of the refractive index and of the particle diameter, and stability of the sol dispersed in water and/or an organic solvent.
In the modified metal oxide composite colloidal particles used in Component (T1) of the coating composition of the present invention, the titanium oxide-tin oxide-zirconium oxide-tungsten oxide composite colloidal particles (A) serving as cores have a primary particle diameter of 2 to 50 nm and preferably 2 to 30 nm. In the colloidal particles (A), a smaller primary particle diameter than 2 nm is not preferable, because, when a coating containing the composite colloidal particles is formed on a substrate, the coating hardness is insufficient to lower scratch resistance and abrasion resistance. Furthermore, a larger primary particle diameter than 50 nm is not preferable, because the obtained coating has lower transparency.
Furthermore, in the modified metal oxide composite colloidal particles used in Component (T1) of the coating composition of the present invention, the colloidal particles (B) for coating surfaces of the colloidal particles (A) are tungsten oxide-tin oxide-silicon dioxide composite colloidal particles having a primary particle diameter of 1 to 7 nm, and in the colloidal particles, tungsten oxide, tin oxide, and silicon dioxide are uniformly complexed (made into a solid solution) at the atom level.

In the present invention, unless otherwise stated, the term "primary particle diameter" means the particle diameter of a single particle in colloidal particles observed under a transmission electron microscope.
In the modified metal oxide composite colloidal particles used in Component (T1) of the coating composition of the present invention, the mass ratio of the titanium oxide-tin oxide-zirconium oxide-tungsten oxide composite colloidal particles (A) serving as cores to the tungsten oxide-tin oxide-silicon dioxide composite colloidal particles (B) is a mass ratio of the colloidal particles (B) to the colloidal particles (A) of 0.01 to 0.5. When the mass ratio is less than 0.01, obtained modified metal oxide composite colloidal particles have poor dispersibility with respect to organic solvents and thus, it is difficult to obtain a stable organic solvent dispersion sol. Furthermore, a higher mass ratio than 0.50 is inefficient, because obtained modified metal oxide composite colloidal particles have no further improvement effect on the dispersibility to organic solvents.
The mass ratio of tungsten oxide (WO₃), tin oxide (SnO₂), and silicon dioxide (SiO₂) is a WO₃/SnO₂ of 0.1 to 100 and a SiO₂/SnO₂ of 0.1 to 100.
In the modified metal oxide composite colloidal particles used in Component (T1) of the coating composition of the present invention, because the colloidal particles (B) are chemically strongly bonded to the surfaces of the colloidal particles (A) not by simple physical adsorption, the colloidal particles (B) are not removed from the colloidal particles (A) by strong stirring, solvent replacement, concentration by ultrafiltration, washing, or the like.
The refractive index of the modified metal oxide composite colloidal particles used in Component (T1) of the coating composition of the present invention varies depending on the composition of the colloidal particles and the crystal state of the colloidal particles but is in a range of about 1.9 to 2.4.
The modified metal oxide composite colloidal particles used in Component (T1) of the coating composition of the present invention may be used as a sol in which the composite oxide colloidal particles are dispersed in water and/or an organic solvent.

The modified metal oxide composite colloidal particle dispersion sol in which the modified metal oxide composite colloidal particles used in Component (T1) of the coating composition of the present invention are dispersed in water and/or an organic solvent has a solid concentration of 0.1 to 50% by mass and preferably 1 to 30% by mass as total metal oxides. A lower solid concentration than 0.1% by mass is not preferable, because a coating composition that is obtained by mixing with other components has an excessively low concentration. Furthermore, when the solid concentration is higher than 50% by mass, the sol may have insufficient stability.
When the sol of the modified metal oxide composite colloidal particles used in Component (T1) of the coating composition of the present invention is used as an organic solvent sol or a mixed solvent sol of water and an organic solvent, specific examples of the organic solvent include alcohols such as methanol, ethanol, isopropanol, and n-propanol, linear amides such as dimethylformamide and N,N-dimethylacetamide, cyclic amides such as N-methyl-2-pyrrolidone, glycols such as methyl cellosolve, ethyl cellosolve, and ethylene glycol, esters such as methyl acetate, ethyl acetate, and butyl acetate, ethers such as dimethyl ether, methyl ethyl ether, and tetrahydrofuran, ketones such as acetone, methyl ethyl ketone, and methyl isobutyl ketone, and aromatic hydrocarbons such as toluene and xylene. These organic solvents may be used alone or in combination of two or more.
When the modified metal oxide composite colloidal particle dispersion sol used in Component (T1) of the coating composition of the present invention is used as an organic solvent sol or a mixed solvent sol of water and an organic solvent, the organic solvent sol or the mixed solvent sol can be obtained by solvent replacement in which water in the sol containing water as a dispersion medium (aqueous sol) of the present invention is replaced by a usual method such as an evaporation method or an ultrafiltration method.
In the case that the organic solvent used is a hydrophobic solvent such as the above ethers, ketones, or aromatic hydrocarbons, prior to the solvent replacement, the surfaces of the colloidal particles of the present invention are preferably treated with a silane coupling agent, a silylation agent, various surfactants, or the like to be hydrophobized, because the solvent can be readily replaced.

The modified metal oxide composite colloidal particles used in Component (T1) of the coating composition of the present invention can be produced by a known method such as an ion exchange method, a peptization method, a hydrolysis method, or a reaction method. Examples of usable raw materials include a water soluble salt, a metal alkoxide, and powder of the metal. Examples of the raw material for the titanium oxide component include titanium tetrachloride, titanium sulfate, titanium nitrate, and titanium isopropoxide. Examples of the raw material for the tin oxide component include stannic chloride, sodium stannate, metal tin, tetrabutoxytin, and dibutoxydibutyltin. Examples of the raw material for the zirconium oxide component include zirconium oxychloride, zirconium oxysulfate, zirconium oxynitrate, zirconium oxyacetate, zirconyl carbonate, zirconium ethoxide, zirconium tetraethoxide, and zirconium tetrapropoxide. Examples of the raw material for the tungsten oxide component include tungsten hexachloride, tungsten oxychloride, sodium tungstate, and hexaethoxytungsten.

The titanium oxide-tin oxide-zirconium oxide-tungsten oxide composite colloidal particles (A) serving as cores in the modified metal oxide composite colloidal particles used in Component (T1) of the coating composition of the present invention can be produced, for example, by the following method. Titanium tetrachloride, stannic chloride, and zirconyl carbonate are added to pure water at a SnO₂/TiO₂ molar ratio of 0.1 to 1.0 and a ZrO₂/TiO₂ molar ratio of 0.1 to 0.4, and heated at about 70 to 100°C to give an aqueous sol of titanium oxide-tin oxide-zirconium oxide composite colloidal particles. To the aqueous sol of composite colloidal particles, a water soluble salt of at least one metal M selected from a group consisting of iron, copper, zinc, yttrium, niobium, molybdenum, indium, antimony, tantalum, lead, bismuth, and cerium may be further added at an M/TiO₂ molar ratio of 0.01 to 0.1.
To the aqueous sol of titanium oxide-tin oxide-zirconium oxide composite colloidal particles obtained in the above procedure, an alkaline component such as isopropylamine is added and then anion-exchanged to produce an alkali-stable aqueous sol. To the aqueous sol, a tungstic acid oligomer that is separately prepared by cation-exchange of an aqueous solution of sodium tungstate and addition of an alkylamine is added and then hydrothermal treatment is performed on the mixture at about 150 to 300°C to produce an aqueous sol containing the titanium oxide-tin oxide-zirconium oxide-tungsten oxide composite colloidal particles (A) serving as in the present invention.

The tungsten oxide-tin oxide-silicon dioxide composite colloidal particles (B) for coating the surfaces of the colloidal particles (A) in the modified metal oxide composite colloidal particles used in Component (T1) of the coating composition of the present invention can be produced, for example, by the following method. Sodium tungstate, sodium stannate, and sodium silicate are added to pure water at a WO₃/SnO₂ mass ratio of 0.1 to 100 and a SiO₂/SnO₂ mass ratio of 0.1 to 100, and the solution is passed through a column packed with a hydrogen form cation exchange resin to produce an aqueous sol of the tungsten oxide-tin oxide-silicon dioxide composite colloidal particles (B).
The modified metal oxide composite colloidal particles of the present invention can be obtained by adding the aqueous sol of colloidal particles (B) to the aqueous sol of colloidal particles (A) with stirring to coat the surfaces of the colloidal particles (A) with the colloidal particles (B). Furthermore, the aqueous sol of colloidal particles (A) and the aqueous sol of colloidal particles (B) may be added in the reverse order or may be added alternately.

The modified metal oxide composite colloidal particle dispersion sol in which the modified metal oxide composite colloidal particles used in Component (T1) of the coating composition of the present invention are dispersed in water and/or an organic solvent may contain an optional component as long as the object of the present invention is achieved.
In particular, when an oxycarboxylic acid is contained in an amount of about 30% by mass or less based on the total mass of metal oxides contained in the sol of the present invention, an obtained sol has further improved dispersibility. Examples of the oxycarboxylic acid to be used include lactic acid, tartaric acid, citric acid, gluconic acid, malic acid, and glycolic acid.
Furthermore, the modified metal oxide composite colloidal particle dispersion sol of the present invention used in Component (T1) of the coating composition of the present invention may contain an alkaline component in an amount of about 30% by mass or less based on the total mass of metal oxides contained in the composite colloidal dispersion sol. Example of the alkaline component include hydroxides of alkali metals such as Li, Na, K, Rb, and Cs, alkylamines such as NH₄, ethylamine, triethylamine, isopropylamine, n-propylamine, and diisopropylamine, aralkylamines such as benzylamine, alicyclic amines such as piperidine, and alkanolamines such as monoethanolamine and triethanolamine. These components may be used in combination of two or more.

Furthermore, when the modified metal oxide composite colloidal particle dispersion sol used in Component (T1) of the coating composition of the present invention is required to have a higher solid concentration, the sol may be concentrated up to about 50% by weight by a usual method such as an evaporation method or an ultrafiltration method. Furthermore, when pH of the sol is required to be adjusted, the above alkali metals, organic bases (amine), oxycarboxylic acids, or the like may be added to the sol after the concentration. In particular, the sol having a total concentration of the metal oxides of 10 to 40% by weight is practically preferred. The ultrafiltration method is preferably used as the concentration method, because polyanions, ultramicroparticles, and the like coexisting in the sol are passed through the ultrafiltration membrane together with water so that the polyanions, ultramicroparticles, and the like that destabilize the sol can be removed from the sol.

The coating composition of the present invention includes 1 to 500 parts by mass of Component (T1) based on 100 parts by mass of Component (S). Namely, the coating composition suitably includes, based on 100 parts by mass of Component (S), which is an organic silicon compound, 1 to 500 parts by mass of Component (T1), which is modified metal oxide composite colloidal particles that include titanium oxide-tin oxide-zirconium oxide-tungsten oxide composite colloidal particles (A) having a primary particle diameter of 2 to 50 nm and having a SnO₂/TiO₂ molar ratio of 0.1 to 1.0, a ZrO₂/TiO₂ molar ratio of 0.1 to 0.4, and a WO₃/TiO₂ molar ratio of 0.03 to 0.15, as cores, and tungsten oxide-tin oxide-silicon dioxide composite colloidal particles (B) having a primary particle diameter of 1 to 7 nm with which the surface of each of the cores is coated. When the amount of the modified metal oxide composite colloidal particles is less than 1 part by mass, the obtained cured film has a low refractive index to especially limit the range of application for substrates. Furthermore, when the amount is more than 500 parts by mass, cracks and other defects are readily generated between the cured film and a substrate to give a higher possibility of lowered transparency.
The coating composition of the present invention may contain a curing catalyst for accelerating reaction, particulate metal oxides for adjusting the refractive index of lenses serving as various substrates, and various surfactants for improving surface wettability when applying and for improving smoothness of a cured film. Moreover, an ultraviolet absorber, an antioxidant, and the like may be added unless the properties of the cured film are affected.
Examples of the curing catalyst include amines such as allylamine and ethylamine, as well as salts or metal salts of various acids and bases including Lewis acids and Lewis bases, such as organic carboxylic acids, chromic acid, hypochlorous acid, boric acid, perchloric acid, bromic acid, selenious acid, thiosulfuric acid, orthosilicic acid, thiocyanic acid, nitrous acid, aluminic acid, and carbonic acid, and metal alkoxides having aluminum, zirconium, and titanium, and metal chelate compounds thereof.
Furthermore, examples of the particulate metal oxide include particles of aluminum oxide, titanium oxide, antimony oxide, zirconium oxide, silicon dioxide, and cerium oxide.

The coating composition of the present invention can be coated on a substrate and cured to form a cured film. The coating composition is cured by hot air drying or active energy ray irradiation. The curing is preferably performed in hot-air at 70 to 200°C and specifically preferably at 90 to 150°C. Examples of the active energy ray include far-infrared rays, which can reduce damage caused by heat.

The coating composition of the present invention can be coated on an optical substrate and cured to form a cured film. In addition, according to the present invention, an optical member having on its surface multi-layered films of a cured film, impact absorption film, and an antireflection film which are made of the coating composition can also be obtained.

Examples of the method for forming on a substrate a cured film made of the coating composition of the present invention include the above method of coating the coating composition on a substrate. Examples of the coating means include usual methods such as a dipping method, a spin method, and a spray method. Among them, the dipping method and the spin method are specifically preferred.
Moreover, before the coating composition is coated on a substrate, a chemical treatment with acids, alkalis, or various organic solvents, a physical treatment with plasma, ultraviolet rays, or the like, or a detergent treatment with various detergents, as well as a primer treatment with various resins may be performed to improve the adhesion between a substrate and the cured film.
Various resins for the primer may contain as a refractive index adjuster the composite colloidal particles described in Component (T1).
Furthermore, an antireflection film composed of a deposited film of an inorganic oxide formed on the cured film made of the coating composition of the present invention is not specifically limited, and may be a related art single-layered or multi-layered antireflection film composed of a deposited film of an inorganic oxide. Examples of the antireflection film include antireflection films disclose in Japanese Patent Application Publication Nos. JP-A-2-262104 and JP-A-56-116003.
An impact absorption film formed from the primer composition can improve impact resistance. The primer composition is mainly composed of polyurethane resins. Specific examples of the polyurethane resin include polyurethane resins obtained by the reaction of a compound containing active hydrogens at both ends and polyisocyanates. Examples of the active hydrogen-containing compound include polyalkylene glycols, polybutadiene glycols, polyalkylene adipates, polybutadiene glycols, polyalkylene carbonates, and polyol compounds such as silicone polyols, polyester polyols, and acrylic polyols. Examples of the polyisocyanate compounds include aliphatic polyisocyanates, aromatic polyisocyanates, hydrogenated xylene diisocyanates, and block-type polyisocyanates blocked with β-diketones, oximes, phenols, caprolactams, and the like. Furthermore, such active hydrogen-containing compounds and polyisocyanate compounds may be reacted by the method of reacting on lens surfaces after coating or the method of coating the reacted urethane resins on lens.
In the present invention, polyester resins, polyvinyl acetal resins, acrylic acid resins, vinyl acetate resins, amino resins, silicon resins, epoxy resins, polyamide resins, vinyl alcohol resins, styrenic resins, and the like may be mixed or copolymerized to be used, as long as the polyurethane performance is not affected.
The impact absorption film is composed of polyacrylic resins, polyvinyl acetate resins, polyvinyl alcohol resins, or the like.
Furthermore, the cured film made of the coating composition of the present invention may be used for a reflection film as a high refractive index film. In addition, the cured film may be used as a multifunctional film by adding functional components such as antifog, photochromic, and antifouling agents.
The optical member having the cured film made of the coating composition of the present invention may be used for glasses lenses as well as camera lenses, windshields of automobiles, optical filters for a liquid crystal display and a plasma display, and the like.

### Examples

### Reference Example 1 (Preparation of Tungstic acid Oligomer)

In a 200 L stainless steel tank, 5.7 kg of sodium tungstate (containing 69.2% as WO₃, manufactured by Daiichi Kigenso Kagaku Kogyo Co., Ltd.) was diluted with 125 kg of pure water, and the solution was passed through a column packed with a hydrogen form cation exchange resin (Amberlite IR-120B, manufactured by Organo Corporation). To the tungstic acid aqueous solution obtained by the cation-exchange, 570 kg of pure water was added to dilute, and then 852 g of isopropylamine was added with stirring to produce a tungstic acid oligomer. The obtained tungstic acid oligomer was 0.56% by mass as WO₃ and had an isopropylamine/WO₃ molar ratio of 0.86.

### Reference Example 2 (Preparation of Antimony Pentoxide Colloidal Particles)

Into a 100 L stainless steel tank, 8.5 kg of antimony trioxide (manufactured by Guangdong Mikuni, containing 99.5% as Sb₂O₃), 41.0 kg of pure water, and 6.9 kg of potassium hydroxide (containing 95% as KOH) were added, and 5.7 kg of 35% by mass hydrogen peroxide was gradually added with stirring. The obtained potassium antimonate aqueous solution had 15.1% by mass as Sb₂O₅, 10.56% by mass as KOH, and a K₂O/Sb₂O₅ molar ratio of 2.4. With pure water 62.1 kg of the obtained potassium antimonate aqueous solution was diluted to adjust 2.5% by mass as Sb₂O₅ and passed through a column packed with a hydrogen form cation exchange resin (Amberlite IR-120B, manufactured by Organo Corporation). After the cation-exchange, 4.5 kg of diisopropylamine was added to the obtained antimonic acid aqueous solution with stirring so as to produce an aqueous sol of antimony pentoxide colloidal particles. The obtained aqueous sol of antimony pentoxide colloidal particles had 1.2% by mass as Sb₂O₅, 0.7% by mass as diisopropylamine, a diisopropylamine/Sb₂O₅ molar ratio of 1.89, and a primary particle diameter of 1 to 7 nm as observed under a transmission electron microscope.

### Reference Example 3 (Preparation of Tungsten Oxide-Tin Oxide-Silicon Dioxide Composite Colloidal Particles)

In 1848 g of pure water, 103 g of sodium silicate No. 3 (containing 29.1% by mass as SiO₂, manufactured by Fuji Kagaku Corp.) was dissolved, and then 21.7 g of sodium tungstate Na₂WO₄-2H₂O (containing 69.1% by mass as WO₃, manufactured by Daiichi Kigenso Kagaku Kogyo Co., Ltd.) and 26.9 g of sodium stannate NaSnO₃·H₂O (containing 55.8% by mass as SnO₂, manufactured by Showa Kako Corporation) were dissolved. Next, the obtained aqueous solution was passed through a column packed with a hydrogen form cation exchange resin (Amberlite IR-120B, manufactured by Organo Corporation) to produce 2353 g of an acidic tungsten oxide-tin oxide-silicon dioxide composite sol (pH 1.9, containing 0.6% by mass as WO₃, 0.6% by mass as SnO₂, and 1.3% by mass as SiO₂ and having a WO₃/SnO₂ mass ratio of 1.0 and a SiO₂/SnO₂ mass ratio of 2.0).

### Reference Example 4 (Preparation of Antimony Pentoxide-Silicon Dioxide Composite Colloidal Particles)

With 1422 g of pure water 171.0 g of a potassium silicate aqueous solution (containing 20.0% by mass as SiO₂, manufactured by Nissan Chemical Industries, Ltd.) was diluted, then 117.1 g of a potassium antimonate aqueous solution (containing 14.6% by mass as Sb₂O₅) obtained in a similar manner to that in Reference Example 2 was mixed with stirring, and the mixture was stirred for 1 hour to produce a mixed aqueous solution of potassium silicate and potassium antimonate. Through a column packed with a hydrogen form cation exchange resin (Amberlite IR-120B, manufactured by Organo Corporation), 1540 g of the obtained mixed aqueous solution of potassium silicate and potassium antimonate was passed to produce 2703 g of an aqueous sol of antimony pentoxide-silicon dioxide composite colloidal particles. The obtained antimony pentoxide-silicon dioxide composite colloidal particles had a total metal oxide (Sb₂O₅+SiO₂) concentration of 1.9% by mass, a SiO₂/Sb₂O₅ mass ratio of 2/1, and a primary particle diameter of 1 to 7 nm by transmission electron microscope observation.

### Example 1

Step (a): Into a 0.5 m³ glass lined steel tank with jacket, 150.0 kg of titanium oxychloride (containing 28.06% by mass as TiO₂, manufactured by Sumitomo Titanium Corporation), 14.9 kg of zirconium carbonate (containing 43.5% by mass as ZrO₂, manufactured by Daiichi Kigenso Kagaku Kogyo Co., Ltd.), and 134 kg of water were poured to prepare 298.9 kg of a mixed aqueous solution of titanium oxychloride and zirconium oxychloride (containing 14.1% by mass as TiO₂ and 2.17% by mass as ZrO₂). The mixed aqueous solution was heated at 60°C with stirring, and then each of 44.0 kg of 35% by mass aqueous hydrogen peroxide (for industrial use) and 25.0 kg of metal tin powder (manufactured by Yamaishi Metal Co., Ltd., AT-Sn, No. 200) was equally divided into ten portions and added with the liquid temperature kept at 60 to 70°C. Here, at first, the aqueous hydrogen peroxide was added and, next, the metal tin powder was added. Then, after the dissolution reaction of metal tin was completed, the additions of the aqueous hydrogen peroxide and the metal tin were continuously repeated. This reaction was carried out under cooling with the liquid temperature kept at 60 to 70°C because the reaction is exothermic. At the time of addition, the ratio of aqueous hydrogen peroxide to metal tin was an H₂O₂/Sn molar ratio of 2.15. The time required for the addition of the aqueous hydrogen peroxide and the metal tin was 2 hours. After the completion of the reaction, to the obtained aqueous solution 14.9 kg of zirconium carbonate (containing 43.5% by mass as ZrO₂, manufactured by Daiichi Kigenso Kagaku Kogyo Co., Ltd.) was further dissolved and then aged at 85°C for 2 hours to produce 471 kg of a pale yellow transparent aqueous solution of basic titanium chloride-zirconium-tin composite salt. The obtained basic titanium chloride-zirconium-tin composite salt aqueous solution had a titanium oxide concentration of 8.9% by mass, a zirconium oxide concentration of 2.8% by mass, a tin oxide concentration of 6.7% by mass, a SnO₂/TiO₂ molar ratio of 0.4, and a ZrO₂/TiO₂ molar ratio of 0.2.
Step (b): To 471 kg of the basic titanium chloride-zirconium-tin composite salt aqueous solution obtained in Step (a), 2422 kg of pure water was added to give an aqueous solution with a total of TiO₂, ZrO₂, and SnO₂ of 3% by mass. The aqueous solution was hydrolyzed at 95 to 98°C for 10 hours to produce 2893 kg of an aggregate slurry of titanium oxide-zirconium oxide-tin oxide composite colloidal particles.
Step (c): The aggregate slurry of titanium oxide-zirconium oxide-tin oxide composite colloid obtained in Step (b) was washed with pure water using an ultrafiltration apparatus for removing excess electrolytes and for peptization to produce 1698 kg of an aqueous sol of acidic titanium oxide-zirconium oxide-tin oxide composite colloidal particles. The obtained aqueous sol had a pH of 2.8, an electric conductivity of 1725 µS/cm, and a solid content (total of TiO₂, ZrO₂, and SnO₂) concentration of 5.06%. Step (d): To 8676 g of the aqueous sol of acidic titanium oxide-zirconium oxide-tin oxide composite colloidal particles obtained in Step (c), 5957 g of pure water was added for adjusting the concentration to give an aqueous sol. The aqueous sol was added to 2927 g of the aqueous sol of antimony pentoxide colloidal particles prepared in Reference Example 2 with stirring, and then the mixed sol was passed through a column packed with a hydroxyl group form anion exchange resin (Amberlite IRA-410, manufactured by Organo Corporation) to produce 19.4 kg of an aqueous sol of titanium oxide-zirconium oxide-tin oxide composite colloidal particles coated with antimony pentoxide. The obtained aqueous sol had a pH of 10.4.
Step (e): To 19.4 kg of the aqueous sol of titanium oxide-zirconium oxide-tin oxide composite colloidal particles coated with antimony pentoxide obtained in Step (d), 8750 g of the tungstic acid oligomer prepared in Reference Example 1 was added and heated for aging at 95°C for 2 hours. The WO₃/TiO₂ molar ratio was 0.08. Hydrothermal treatment was performed on 28.15 kg of the obtained aqueous sol and substantially the same mass of heated pure water, at 300°C, a pressure of 20 MPa (mega Pascal), an average flow rate of 1.03 L/minute, and a residence time of 7.7 minutes to produce 84.0 kg of an aqueous sol of titanium oxide-zirconium oxide-tin oxide-tungsten oxide-antimony pentoxide composite colloidal particles.
Step (f): To 84.0 kg of the hydrothermal-treated aqueous sol of titanium oxide-zirconium oxide-tin oxide-tungsten oxide-antimony pentoxide composite colloidal particles obtained in Step (e), 2353 g of the aqueous sol of tungsten oxide-tin oxide-silicon dioxide composite colloidal particles obtained in Reference Example 3 was added and heated for aging at 95°C for 2 hours with stirring. Furthermore, the sol was concentrated using an ultrafiltration apparatus. The obtained sol had a specific gravity of 1.264, a viscosity of 7.4 mPa·s, a pH of 7.7, a particle diameter of 51 nm by a dynamic light scattering method (Coulter Corporation N5), and a total metal oxide concentration of 26.2% by mass.
Water in 1985 g of the concentrated aqueous sol was replaced with methanol using an evaporator with a recovery flask at 600 torr with methanol being added to produce a methanol sol of titanium oxide-zirconium oxide-tin oxide-tungsten oxide-antimony pentoxide composite colloidal particles coated with tungsten oxide-tin oxide-silicon dioxide composite colloidal particles. The obtained methanol sol had a specific gravity of 1.070, a viscosity of 6.4, a pH of 7.5 (diluted with the same mass of water), a primary particle diameter of 6 to 8 nm by transmission electron microscope observation, a particle diameter of 37 nm by a dynamic light scattering method (Coulter Corporation N5), a water content of 0.8%, a transmission factor of 65%, and a total metal oxide concentration of 30.4%.

### Example 2

Step (a): Into a 0.5 m³ glass lined steel tank with jacket, 92.3 kg of titanium oxychloride (containing 28.06% by mass as TiO₂, manufactured by Sumitomo Titanium Corporation), 4.0 kg of zirconium carbonate (containing 43.5% by mass as ZrO₂, manufactured by Daiichi Kigenso Kagaku Kogyo Co., Ltd.), and 90 kg of water were poured to prepare 206.4 kg of a mixed aqueous solution of titanium oxychloride and zirconium oxychloride (containing 12.5% by mass as TiO₂ and 0.84% by mass as ZrO₂). The mixed aqueous solution was heated at 60°C with stirring, and then each of 45.6 kg of 35% by mass aqueous hydrogen peroxide (for industrial use) and 25.0 kg of metal tin powder (manufactured by Yamaishi Metal Co., Ltd., AT-Sn, No. 200) was equally divided into ten portions and added with the liquid temperature kept at 60 to 70°C. Here, at first, the aqueous hydrogen peroxide was added and, next, the metal tin powder was added. Then, after the dissolution reaction of the metal tin was completed, the additions of the aqueous hydrogen peroxide and the metal tin were continuously repeated. This reaction was carried out under cooling with the liquid temperature kept at 60 to 70°C because the reaction is exothermic. At the time of addition, the ratio of aqueous hydrogen peroxide to metal tin was an H₂O₂/Sn molar ratio of 2.2. The time required for the addition of the aqueous hydrogen peroxide and the metal tin was 3 hours. After the completion of the reaction, to the obtained aqueous solution 4.0 kg of zirconium carbonate (containing 43.5% by mass as ZrO₂, manufactured by Daiichi Kigenso Kagaku Kogyo Co., Ltd.) was further dissolved and then aged at 85°C for 2 hours to produce 347 kg of a pale yellow transparent aqueous solution of basic titanium chloride-zirconium-tin composite salt. The obtained basic titanium chloride-zirconium-tin composite salt aqueous solution had a titanium oxide concentration of 7.5% by mass, a zirconium oxide concentration of 1.0% by mass, a tin oxide concentration of 9.1% by mass, a SnO₂/TiO₂ molar ratio of 0.65, and a ZrO₂/TiO₂ molar ratio of 0.2.
Step (b): To 347 kg of the basic titanium chloride-zirconium-tin composite salt aqueous solution obtained in Step (a), 1860 kg of pure water was added to give an aqueous solution with a total of TiO₂, ZrO₂, and SnO₂ of 3% by mass. The aqueous solution was hydrolyzed at 95 to 98°C for 10 hours to produce an aggregate slurry of titanium oxide-zirconium oxide-tin oxide composite colloidal particles.
Step (c): The aggregate slurry of titanium oxide-zirconium oxide-tin oxide composite colloid obtained in Step (b) was washed with pure water using an ultrafiltration apparatus for peptization by removing excess electrolytes to produce 1398 kg of an aqueous sol of acidic titanium oxide-zirconium oxide-tin oxide composite colloidal particles. The obtained aqueous sol had a pH of 2.8, an electric conductivity of 1580 µS/cm, and a solid content (total of TiO₂, ZrO₂, and SnO₂) concentration of 4.59%. Step (d): To 1398 g of the aqueous sol of acidic titanium oxide-zirconium oxide-tin oxide composite colloidal particles obtained in Step (c), 644 kg of the aqueous sol of antimony pentoxide colloidal particles prepared in Reference Example 2 was added and mixed, and then the mixed sol was passed through a column packed with a hydroxyl group form anion exchange resin (Amberlite IRA-410, manufactured by Organo Corporation) to produce 2582 kg of an aqueous sol of titanium oxide-zirconium oxide-tin oxide composite colloidal particles coated with antimony pentoxide. The obtained aqueous sol had a pH of 10.67 and a total metal oxide concentration of 2.92% by mass.
Step (e): To 8867 g of the aqueous sol of titanium oxide-zirconium oxide-tin oxide composite colloidal particles coated with antimony pentoxide obtained in Step (d), 2589 g of the tungstic acid oligomer prepared in Reference Example 2 was added and heated for aging at a liquid temperature of 95°C for 2 hours with stirring. The WO₃/TiO₂ molar ratio was 0.04. Hydrothermal treatment was performed on 11.5 kg of the obtained aqueous sol and substantially the same mass of heated pure water, at 300°C, a pressure of 20 MPa (mega Pascal), an average flow rate of 1.03 L/minute, and a residence time of 7.7 minutes to produce 25.23 kg of an aqueous sol of titanium oxide-zirconium oxide-tin oxide-tungsten oxide-antimony pentoxide composite colloidal particles.
Step (f): To 25.23 kg of the hydrothermal-treated aqueous sol of titanium oxide-zirconium oxide-tin oxide-tungsten oxide-antimony pentoxide composite colloidal particles obtained in Step (e), 2353 g of the aqueous sol of tungsten oxide-tin oxide-silicon dioxide composite colloidal particles obtained in Reference Example 3 was added and heated for aging at 95°C for 2 hours with stirring. Furthermore, the sol was concentrated using an ultrafiltration apparatus. The obtained sol had a specific gravity of 1.186, a viscosity of 3.4 mPa·s, a pH of 7.2, a particle diameter of 42 nm by a dynamic light scattering method (Coulter Corporation N5), and a total metal oxide concentration of 19.6% by mass.
Water in 1566 g of the concentrated aqueous sol was replaced with methanol using an evaporator with a recovery flask at 600 torr with methanol being added to produce a methanol sol of titanium oxide-zirconium oxide-tin oxide-tungsten oxide-antimony pentoxide composite colloidal particles coated with tungsten oxide-tin oxide-silicon dioxide composite colloidal particles. The obtained methanol sol had a specific gravity of 1.070, a viscosity of 4.0, a pH of 7.1 (diluted with the same mass of water), a primary particle diameter of 5 to 6 nm by transmission electron microscope observation, a particle diameter of 42 nm by a dynamic light scattering method (Coulter Corporation N5), a water content of 0.5%, a transmission factor of 35%, and a total metal oxide concentration of 30.3%.

### Comparative Example 1

Hydrothermal treatment was performed on 30.0 kg of the aqueous sol of titanium oxide-zirconium oxide-tin oxide composite colloidal particles coated with antimony pentoxide obtained in Step (d) in Example 2 and substantially the same mass of heated pure water, at 300°C, a pressure of 20 MPa (mega Pascal), an average flow rate of 1.03 L/minute, and a residence time of 7.7 minutes to produce 56.3 kg of an aqueous sol of titanium oxide-zirconium oxide-tin oxide-antimony pentoxide composite colloidal particles. To 4333 g of the obtained aqueous sol (a total metal oxide concentration of 1.2% by mass), 1.5 g of 35% by mass aqueous hydrogen peroxide was added, then 547 g of the aqueous sol of antimony pentoxide-silicon dioxide composite colloidal particles obtained in Reference Example 4 (a total metal oxide concentration of 1.9% by mass) was added with stirring, and aged at 95°C for 2 hours. Furthermore, the obtained sol was concentrated using an ultrafiltration, apparatus. The obtained sol had a SnO₂/TiO₂ molar ratio of 0.65 and a ZrO₂/TiO₂ molar ratio of 0.20. Furthermore, the physical properties of the aqueous sol were a specific gravity of 1.142, a viscosity of 2.1 mPa·s, a pH of 7.7, a primary particle diameter of 5 to 6 nm by transmission electron microscope observation, a particle diameter of 53 nm by a dynamic light scattering method (Coulter Corporation N5), and a total metal oxide concentration of 15.9% by mass. Water in 325 g of the concentrated aqueous sol was removed using an evaporator with a recovery flask at 600 torr with methanol being added to be replaced with methanol to produce a methanol sol of titanium oxide-zirconium oxide-tin oxide-antimony pentoxide composite colloidal particles coated with antimony pentoxide-silicon dioxide composite colloid. The obtained sol had a specific gravity of 1.072, a viscosity of 1.9, a pH of 6.2 (diluted with the same mass of water), a primary particle diameter of 5 to 6 nm by transmission electron microscope observation, a particle diameter of 43 nm by a dynamic light scattering method (Coulter Corporation N5), a water content of 0.3% by mass, a transmission factor of 12%, and a total metal oxide concentration of 31.0% by mass.

### Comparative Example 2

To 40.0 kg of the aqueous sol of titanium oxide-zirconium oxide-tin oxide composite colloidal particles coated with antimony pentoxide obtained in Step (d) in Example 2, 4.5 kg of the tungstic acid oligomer prepared in Reference Example 1 was added and aged at 95°C for 2 hours. The WO₃/TiO₂ molar ratio was 0.02. After aging, hydrothermal treatment was performed on 44.1 kg of the obtained aqueous sol and substantially the same mass of heated pure water, at 300°C, a pressure of 20 MPa (mega Pascal), an average flow rate of 1.03 L/minute, and a residence time of 7.7 minutes to produce 106.2 kg of an aqueous sol of titanium oxide-zirconium oxide-tin oxide-tungsten oxide-antimony pentoxide composite colloidal particles. To 4455 g of the obtained aqueous sol (a total metal oxide concentration of 1.1% by mass), 1.5 g of 35% by mass aqueous hydrogen peroxide was added, then 516 g of the aqueous sol of antimony pentoxide-silicon dioxide composite colloidal particles obtained in Reference Example 4 (a total metal oxide concentration of 1.9% by mass) was added with stirring, and aged at 95°C for 2 hours. Furthermore, the obtained sol was concentrated using an ultrafiltration apparatus. The obtained sol had a SnO₂/TiO₂ molar ratio of 0.65, a ZrO₂/TiO₂ molar ratio of 0.20, and a WO₃/TiO₂ molar ratio of 0.02. Furthermore, the physical properties of the aqueous sol were a specific gravity of 1.130, a viscosity of 2.1 mPa·s, a pH of 8.1, a primary particle diameter of 5 to 6 nm by transmission electron microscope observation, a particle diameter of 48 nm by a dynamic light scattering method (Coulter Corporation N5), and a total metal oxide concentration of 14.4% by mass. Water in 335 g of the concentrated aqueous sol was removed using an evaporator with a recovery flask at 600 torr with methanol being added to be replaced with methanol to produce a methanol sol of titanium oxide-zirconium oxide-tin oxide-tungsten oxide-antimony pentoxide composite colloidal particles coated with antimony pentoxide-silicon dioxide composite colloid. The obtained sol had a specific gravity of 1.066, a viscosity of 1.7, a pH of 6.4 (diluted with the same mass of water), a primary particle diameter of 5 to 6 nm by transmission electron microscope observation, a particle diameter of 39 nm by a dynamic light scattering method (Coulter Corporation N5), a water content of 0.3% by mass, a transmission factor of 19%, and a total metal oxide concentration of 30.4% by mass.

### Comparative Example 3

To 40.0 kg of the aqueous sol of titanium oxide-zirconium oxide-tin oxide composite colloidal particles coated with antimony pentoxide obtained in Step (d) in Example 2, 45.0 kg of the tungstic acid oligomer prepared in Reference Example 1 was added and aged at 95°C for 2 hours. The WO₃/TiO₂ molar ratio was 0.20. After aging, hydrothermal treatment was performed on 84.9 kg of the obtained aqueous sol and substantially the same mass of heated pure water, at 300°C, a pressure of 20 MPa (mega Pascal), an average flow rate of 1.03 L/minute, and a residence time of 7.7 minutes to produce 157.5 kg of an aqueous sol. To 6875 g of the obtained aqueous sol (a total metal oxide concentration of 0.8% by mass), 1.6 g of 35% by mass aqueous hydrogen peroxide was added, then 579 g of the aqueous sol of antimony pentoxide-silicon dioxide composite colloidal particles obtained in Reference Example 4 (a total metal oxide concentration of 1.9% by mass) was added with stirring, and aged at 95°C for 2 hours. Then, the obtained aqueous sol was concentrated using an ultrafiltration apparatus. The concentrated sol had a SnO₂/TiO₂ molar ratio of 0.65, a ZrO₂/TiO₂ molar ratio of 0.20, and a WO₃/TiO₂ molar ratio of 0.20. Furthermore, the physical properties of the aqueous sol were a specific gravity of 1.154, a viscosity of 2.4 mPa·s, a pH of 7.5, a primary particle diameter of 5 to 6 nm by transmission electron microscope observation, a particle diameter of 49 nm by a dynamic light scattering method (Coulter Corporation N5), and a total metal oxide concentration of 17.0% by mass. Water in 324 g of the concentrated aqueous sol was removed using an evaporator with a recovery flask at 600 torr with methanol being added to be replaced with methanol to produce a methanol sol of titanium oxide-zirconium oxide-tin oxide-tungsten oxide-antimony pentoxide composite colloidal particles coated with antimony pentoxide-silicon dioxide composite colloid. The obtained sol had a specific gravity of 1.052, a viscosity of 4.6, a pH of 7.1 (diluted with the same mass of water), a primary particle diameter of 5 to 6 nm by transmission electron microscope observation, a particle diameter of 44 nm by a dynamic light scattering method (Coulter Corporation N5), a water content of 0.7% by mass, a transmission factor of 31%, and a solid concentration of 29.1% by mass.

### Example 3

### (Preparation of Coating Composition)

Into a glass container with a magnetic stirrer, 55.8 parts by mass of γ-glycidoxypropyltrimethoxysilane corresponding to Component (S) described above was added, and 19.5 parts by mass of 0.01 N hydrochloric acid was added dropwise over 3 hours with stirring. After the completion of the dropwise addition, the mixture was stirred for 0.5 hour to produce a partial hydrolysate of γ-glycidoxypropyltrimethoxysilane. Next, 148.5 parts by mass of the methanol sol of titanium oxide-zirconium oxide-tin oxide-tungsten oxide-antimony pentoxide composite colloidal particles coated with tungsten oxide-tin oxide-silicon dioxide composite colloidal particles obtained in Example 2 (containing 30.3% by mass calculated as total metal oxides), 65 parts by mass of butyl cellosolve, and 0.9 part by mass of aluminum acetylacetonate as a curing catalyst were added to 75.3 parts by mass of the partial hydrolysate of γ-glycidoxypropyltrimethoxysilane. The whole was thoroughly stirred, and then filtered to prepare a coating composition for hard coating. Separately, 151.0 parts by mass of a commercially available aqueous emulsion polyurethane "SUPERFLEX (registered trademark) 300" (manufactured by Dai-ichi Kogyo Seiyaku Co., Ltd., a solid concentration of 30% by mass), 151.0 parts by mass of the methanol sol of titanium oxide-zirconium oxide-tin oxide-tungsten oxide-antimony pentoxide composite colloidal particles coated with tungsten oxide-tin oxide-silicon dioxide composite colloidal particles obtained in Example 2, and 0.5 part by mass of 3-methoxypropylamine (manufactured by Koei Chemical Co., Ltd.) were mixed to prepare a coating composition for a primer layer.

### (Formation of Cured Film)

A commercially available polycarbonate plate with a refractive index n_{D}=1.59 was prepared, coated with the coating composition for a primer layer by a spin coat method, and treated with heat at 100°C for 30 minutes to form a coating. Furthermore, the plate was coated with the coating composition for hard coating and then treated with heat at 120°C for 2 hours to cure the coating. The evaluation results are shown in Table 1. The obtained cured film had good moisture resistance and water resistance.

### Example 4

A cured film was formed in the same manner as in Example 3 except for using 122.0 parts by mass of "NEOSTECKER (registered trademark) 700" (manufactured by Nicca Chemical Co., Ltd., a solid concentration of 37% by mass) in place of "SUPERFLEX (registered trademark) 300" as a commercially available aqueous emulsion polyurethane used for the coating composition for a primer layer. The evaluation results are shown in Table 1. The obtained cured film had good moisture resistance and water resistance.

### Example 5

A cured film was formed in the same manner as in Example 3 except for using 148.0 parts by mass of the methanol sol of titanium oxide-zirconium oxide-tin oxide-tungsten oxide-antimony pentoxide composite colloidal particles coated with tungsten oxide-tin oxide-silicon dioxide composite colloidal particles (containing 30.4% by mass calculated as total metal oxides) obtained in Example 1 in place of the methanol sol of titanium oxide-zirconium oxide-tin oxide-tungsten oxide-antimony pentoxide composite colloidal particles coated with tungsten oxide-tin oxide-silicon dioxide composite colloidal particles obtained in Example 2. The evaluation results are shown in Table 1. The obtained cured film had good moisture resistance and water resistance.

### Example 6

A cured film was formed in the same manner as in Example 5 except for using 122.0 parts by mass of "NEOSTECKER (registered trademark) 700" (manufactured by Nicca Chemical Co., Ltd., a solid concentration of 37% by mass) in place of "SUPERFLEX (registered trademark) 300" as a commercially available aqueous emulsion polyurethane used for the coating composition for a primer layer. The evaluation results are shown in Table 1. The obtained cured film had good moisture resistance and water resistance.

### Example 7

A cured film was formed in the same manner as in Example 3 except for using 11.8 parts by mass of tetraethoxysilane and 41.3 parts by mass of γ-glycidoxypropylmethyldiethoxysilane corresponding to Component (S) in place of γ-glycidoxypropyltrimethoxysilane also corresponding to Component (S) used in Example 3, and using 1.4 parts by mass of aluminum acetylacetonate and 0.3 part by mass of ammonium perchlorate as curing catalysts. The evaluation results are shown in Table 1. The obtained cured film had good moisture resistance and water resistance.

### Example 8

A cured film was formed in the same manner as in Example 4 except for using 39.3 parts by mass of γ-glycidoxypropyltrimethoxysilane and 16.5 parts by mass of γ-glycidoxypropylmethyldimethoxysilane corresponding to Component (S) in place of γ-glycidoxypropyltrimethoxysilane corresponding to Component (S). The evaluation results are shown in Table 1. The obtained cured film had good moisture resistance and water resistance.

### Comparative Example 4

A cured film was formed in the same manner as in Example 3 except for using 145.8 parts by mass of the methanol sol of titanium oxide-zirconium oxide-tin oxide-antimony pentoxide composite colloidal particles coated with antimony pentoxide-silicon dioxide composite colloid obtained in Comparative Example 1 in place of the sol used in Example 3. The evaluation results are shown in Table 1.

### Comparative Example 5

A cured film was formed in the same manner as in Example 3 except for using 148.4 parts by mass of the methanol sol of titanium oxide-zirconium oxide-tin oxide-tungsten oxide-antimony pentoxide composite colloidal particles coated with antimony pentoxide-silicon dioxide composite colloid obtained in Comparative Example 2 in place of the sol used in Example 3. The evaluation results are shown in Table 1.

### Comparative Example 6

A cured film was formed in the same manner as in Example 3 except for using 154.8 parts by mass of the methanol sol of titanium oxide-zirconium oxide-tin oxide-tungsten oxide-antimony pentoxide composite colloidal particles coated with antimony pentoxide-silicon dioxide composite colloid obtained in Comparative Example 3 in place of the sol used in Example 3. The evaluation results are shown in Table 1.

Properties of the optical member having the cured film obtained in each of Examples and Comparative Examples were measured by the following methods.

### (1) Scratch Resistance Test

Each surface of the cured film was scratched with a #0000 steel wool, and resistance for the scratch was visually judged. A criterion was as follows.
A: No scratches were observed.
B: A few scratches were observed.
C: Remarkable scratches were observed.

### (2) Adhesion Test

Each cured film was crosscut to 100 sections at intervals of 1 mm, and an adhesive tape (Cellotape; manufactured by Nichiban Co., Ltd.) was strongly stuck to the crosscut part, and then rapidly peeled off. Each cured film after peeling off the adhesive tape was examined on the peeling of the cured film.

### (3) Transparency Test

Clouding of each cured film was visually examined under a fluorescent lamp in a dark room. A criterion was as follows.
A: No clouding was observed.
B: A little clouding was observed.
C: Whitening was remarkably observed.

### (4) Weather Resistance Test

The obtained optical member was exposed to outdoor for one month, and appearance change of the optical member after exposure was visually judged.

**Table 1**

| Example | Sol used | Scratch Resistance | Adhesion | Transparency | Weather Resistance |
|---|---|---|---|---|---|
| Example 3 | Example 2 | A | Good | A | No Change |
| Example 4 | Example 2 | A | Good | A | No Change |
| Example 5 | Example 1 | A | Good | A | No Change |
| Example 6 | Example 1 | A | Good | A | No Change |
| Example 7 | Example 2 | A | Good | A | No Change |
| Example 8 | Example 2 | A | Good | A | No Change |
| Comparative Example 4 | Comparative Example 1 | A | Good | B | Yellowing |
| Comparative Example 5 | Comparative Example 2 | A | Good | A to B | Yellowing |
| Comparative Example 6 | Comparative Example 3 | B | Good | A to B | Slightly Yellowing |

Each cured film in Examples 3 to 8 of the present invention was excellent in all of scratch resistance, adhesion, transparency, and weather resistance. In contrast, each cured film in Comparative Examples 1 to 3 had insufficient scratch resistance, adhesion, transparency, and weather resistance.

### INDUSTRIAL APPLICABILITY

The modified metal oxide composite colloidal particles of the present invention can be used for a hard coating film and an antireflection film applying to glasses lenses as well as camera lenses, windshields of automobiles, optical filters for a liquid crystal display and a plasma display, and the like. Furthermore, when the modified metal oxide composite colloidal particle dispersion sol of the present invention is applied to the surfaces of several materials such as organic fibers and paper, these materials can obtain improved properties such as flame resistance, anti-slip properties, antistatic properties, and dyeing affinity. In addition, these sols can be used for a binder of several materials such as ceramic fibers, glass fibers, and ceramics. Moreover, when these sols are mixed with various coating agents, various adhesives, and the like, the cured film can obtain improved properties such as water resistance, chemical resistance, light resistance, weather resistance, abrasion resistance, and flame resistance. Furthermore, these sols can also be commonly used as surface treating agents for several materials such as metal materials, ceramic materials, glass materials, and plastic materials. Moreover, these sols are useful as a catalyst component.

## Claims

1. A modified metal oxide composite colloidal particle comprising:
a titanium oxide-tin oxide-zirconium oxide-tungsten oxide composite colloidal particle (A) having a primary particle diameter of 2 to 50 nm and having a SnO₂/TiO₂ molar ratio of 0.1 to 1.0, a ZrO₂/TiO₂ molar ratio of 0.1 to 0.4, and a WO₃/TiO₂ molar ratio of 0.03 to 0.15, as a core; and
a tungsten oxide-tin oxide-silicon dioxide composite colloidal particle (B) having a primary particle diameter of 1 to 7 nm with which a surface of the core is coated.

2. The modified metal oxide composite colloidal particle according to claim 1, wherein a mass ratio of the colloidal particle (B) with respect to the colloidal particle (A) is 0.01 to 0.5.

3. The modified metal oxide composite colloidal particle according to claim 1 or 2, wherein a mass ratio of tungsten oxide (WO₃), tin oxide (SnO₂), and silicon dioxide (SiO₂) in the colloidal particle (B) is a mass ratio of WO₃/SnO₂ of 0.1 to 100 and a mass ratio of SiO₂/SnO₂ of 0.1 to 100.

4. The modified metal oxide composite colloidal particle according to claim 1 or 2, wherein the colloidal particle (A) further includes oxide of at least one metal M selected from a group consisting of iron, copper, zinc, yttrium, niobium, molybdenum, indium, antimony, tantalum, lead, bismuth, and cerium at an M/TiO₂ molar ratio of 0.01 to 0.1.

5. A modified metal oxide composite colloidal particle dispersion sol comprising the modified metal oxide composite colloidal particle according to any one of claims 1 to 4 dispersed in water and/or an organic solvent.

6. A coating composition comprising:
Component (S); and
Component (T1), wherein
Component (S) is at least one silicon-containing substance selected from a group consisting of an organic silicon compound of General Formula (I):
(R¹)ₐ(R³)_{b}Si(OR²)_{4-(a+b)} (I)
(where each of R¹ and R³ is an alkyl group, an aryl group, a halogenated alkyl group, a halogenated aryl group, an alkenyl group, or an organic group having an epoxy group, an acryloyl group, a methacryloyl group, a mercapto group, an amino group, or a cyano group and bonded to a silicon atom through a Si-C bond, R² is a C₁₋₈ alkyl group, an alkoxyalkyl group, or an acyl group, each of a and b is an integer of 0, 1, or 2, and a+b is an integer of 0, 1 , or 2) and General Formula (II):
[(R⁴)_{c}Si(OX)_{3-c}]₂ Y (II)
(where R⁴ is a C₁₋₅ alkyl group, X is a C₁₋₄ alkyl group or an acyl group, Y is a methylene group or a C₂₋₂₀ alkylene group, and c is an integer of 0 or 1) and a hydrolysate of the silicon-containing substance, and
Component (T1) is a modified metal oxide composite colloidal particle comprising a titanium oxide-tin oxide-zirconium oxide-tungsten oxide composite colloidal particle (A) having a primary particle diameter of 2 to 50 nm and having a SnO₂/TiO₂ molar ratio of 0.1 to 1.0, a ZrO₂/TiO₂ molar ratio of 0.1 to 0.4, and a WO₃/TiO₂ molar ratio of 0.03 to 0.15, as a core, and a tungsten oxide-tin oxide-silicon dioxide composite colloidal particle (B) having a primary particle diameter of 1 to 7 nm with which the surface of the core is coated.

7. The coating composition according to claim 6, wherein a mass ratio of the colloidal particle (B) with respect to the colloidal particle (A) is 0.01 to 0.5 in the modified metal oxide composite colloidal particle.

8. The coating composition according to claim 6 or 7, wherein a mass ratio of tungsten oxide (WO₃), tin oxide (SnO₂), and silicon dioxide (SiO₂) in the colloidal particle (B) is a mass ratio of WO₃/SnO₂ of 0.1 to 100 and a mass ratio of SiO₂/SnO₂ of 0.1 to 100 in the modified metal oxide composite colloidal particle.

9. The coating composition according to claim 6 or 7, wherein the colloidal particle (A) further includes oxide of at least one metal M selected from a group consisting of iron, copper, zinc, yttrium, niobium, molybdenum, indium, antimony, tantalum, lead, bismuth, and cerium at an M/TiO₂ molar ratio of 0.01 to 0.1 in the modified metal oxide composite colloidal particle.

10. The coating composition according to claim 6 or 7 further comprising at least one curing catalyst selected from a group consisting of a metal salt, a metal alkoxide, and a metal chelate compound.

11. An optical member having a cured film formed on a surface of an optical substrate from the coating composition according to any one of claims 6 to 10.

12. The optical member according to claim 11 further having an antireflection film on a surface of the optical member.

## Patentansprüche

1. Kolloidaler Partikel aus modifiziertem Metalloxidkomposit umfassend
einen kolloiden Partikel (A) aus Titanoxid-Zinnoxid-Zirkoniumoxid-Wolframoxid-Komposit, der einen primären Partikeldurchmesser von 2 bis 50 nm aufweist und ein molares Verhältnis SnO₂/TiO₂ von 0,1 bis 1,0, ein molares Verhältnis ZrO₂/TiO₂ von 0,1 bis 0,4 und ein molares Verhältnis WO₃/TiO₂ von 0,03 bis 0,15 aufweist, als einen Kern und
einen kolloidalen Partikel (B) aus Wolframoxid-Zinnoxid-Siliziumdioxid-Komposit, der einen primären Partikeldurchmesser von 1 bis 7 nm aufweist, mit dem eine Oberfläche des Kerns beschichtet ist.

2. Kolloidaler Partikel aus modifiziertem Metalloxidkomposit gemäß Anspruch 1, worin das Massenverhältnis des kolloidalen Partikels (B) in Bezug auf den kolloidalen Partikel (A) 0,01 bis 0,5 ist.

3. Kolloidaler Partikel aus modifiziertem Metalloxidkomposit gemäß Anspruch 1 oder 2 worin das Massenverhältnis von Wolframoxid (WO₃), Zinnoxid (SnO₂) und Siliziumdioxid (SiO₂) in dem kolloidalen Partikel (B) das Massenverhältnis von WO₃/SnO₂ von 0,1 bis 100 und das Massenverhältnis von SiO₂/SnO₂ von 0,1 bis 100 ist.

4. Kolloidaler Partikel aus modifiziertem Metalloxidkomposit gemäß Anspruch 1 oder 2, worin der kolloidale Partikel (A) ferner ein Oxid von wenigstens einem Metall M ausgewählt aus der Gruppe bestehend aus Eisen, Kupfer, Zink, Yttrium, Niob, Molybdän, Indium, Antimon, Tantal, Blei, Bismut und Cer in einem molaren Verhältnis M/TiO₂ von 0,01 bis 0,1 einschließt.

5. Dispersionssol kolloidaler Partikel aus einem modifizierten Metalloxidkomposit umfassend den kolloidalen Partikel aus modifiziertem Metalloxidkomposit gemäß einem der Ansprüche 1 bis 4, der in Wasser und/oder einem organischen Lösungsmittel dispergiert ist.

6. Beschichtungszusammensetzung umfassend
Komponente (S) und
Komponente (T1), worin
die Komponente (S) wenigstens eine siliziumhaltige Substanz ausgewählt aus einer Gruppe bestehend aus einer organischen Siliziumverbindung der allgemeinen Formel (I)
(R¹)ₐ(R³)_{b}Si(OR²)_{4-a+b} (I)
(worin jedes von R¹ und R³ eine Alkylgruppe, eine Arylgruppe, eine halogenierte Alkylgruppe, eine halogenierte Arylgruppe, eine Alkenylgruppe oder eine organische Gruppe mit einer Epoxygruppe, einer Acryloylgruppe, einer Methacryloylgruppe, einer Mercaptogruppe, einer Aminogruppe oder einer Cyanogruppe ist und durch eine SiC-Bindung an ein Siliziumatom gebunden ist, R² eine C₁₋₈-Alkylgruppe, eine Alkoxyalkylgruppe oder eine Acylgruppe ist, jedes von a und b eine ganze Zahl von 0, 1 oder 2 ist und a+b eine ganze Zahl von 0, 1 oder 2 ist) und der allgemeinen Formel (II)
[(R⁴)_{c}Si(OX)_{3-c}]₂ Y (II)
(worin R⁴ eine C₁₋₅-Alkylgruppe ist, X eine C₁₋₄-Alkylgruppe oder eine Acylgruppe ist, Y eine Methylengruppe oder eine C₂₋₂₀-Alkylengruppe ist und c eine ganze Zahl von 0 oder 1 ist) und einem Hydrolysat der siliziumhaltigen Substanz ist und
die Komponente (T1) ein kolloidaler Partikel aus modifiziertem Metalloxidkomposit ist, der einen kolloiden Partikel (A) aus Titanoxid-Zinnoxid-Zirkoniumoxid-Wolframoxid-Komposit, der einen primären Partikeldurchmesser von 2 bis 50 nm aufweist und ein molares Verhältnis SnO₂/TiO₂ von 0,1 bis 1,0, ein molares Verhältnis ZrO₂/TiO₂ von 0,1 bis 0,4 und ein molares Verhältnis WO₃/TiO₂ von 0,03 bis 0,15 aufweist, als einen Kern und einen kolloidalen Partikel (B) aus Wolframoxid-Zinnoxid-Siliziumdioxid-Komposit, der einen primären Partikeldurchmesser von 1 bis 7 nm aufweist, mit dem eine Oberfläche des Kerns beschichtet ist, umfasst.

7. Beschichtungszusammensetzung gemäß Anspruch 6, worin das Massenverhältnis des kolloidalen Partikels (B) in Bezug auf den kolloidalen Partikel (A) 0,01 bis 0,5 ist.

8. Beschichtungszusammensetzung gemäß Anspruch 6 oder 7, worin das Massenverhältnis von Wolframoxid (WO₃), Zinnoxid (SnO₂) und Siliziumdioxid (SiO₂) in dem kolloidalen Partikel (B) das Massenverhältnis von WO₃/SnO₂ von 0,1 bis 100 und das Massenverhältnis von SiO₂/SnO₂ von 0,1 bis 100 ist.

9. Beschichtungszusammensetzung gemäß Anspruch 6 oder 7, worin der kolloidale Partikel (A) ferner ein Oxid von wenigstens einem Metall M ausgewählt aus der Gruppe bestehend aus Eisen, Kupfer, Zink, Yttrium, Niob, Molybdän, Indium, Antimon, Tantal, Blei, Bismut und Cer in einem molaren Verhältnis M/TiO₂ von 0,01 bis 0,1 einschließt.

10. Beschichtungszusammensetzung gemäß Anspruch 6 oder 7 ferner umfassend wenigstens einen Härtungskatalysator ausgewählt aus der Gruppe bestehend aus einem Metallsalz, einem Metallalkoxid und einer Metallchelatverbindung.

11. Optisches Element, das einen gehärteten Film aufweist, der auf einer Oberfläche eines optischen Substrats aus der Beschichtungszusammensetzung gemäß einem der Ansprüche 6 bis 10 gebildet ist.

12. Optisches Element gemäß Anspruch 11, das ferner einen Antireflexionsfilm auf einer Oberfläche des optischen Elements aufweist.

## Revendications

1. Particule colloïdale composite d'oxyde métallique modifiée comprenant :
une particule colloïdale composite d'oxyde de titane - oxyde d'étain - oxyde de zirconium - oxyde de tungstène (A) ayant un diamètre de particules primaires de 2 à 50 nm et ayant un rapport molaire SnO₂/TiO₂ de 0,1 à 1,0, un rapport molaire ZrO₂/TiO₂ de 0,1 à 0,4 et un rapport molaire WO₃/TiO₂ de 0,03 à 0,15, en tant que noyau ; et
une particule colloïdale composite d'oxyde de tungstène - oxyde de d'étain - dioxyde de silicium (B) ayant un diamètre de particules primaires de 1 à 7 nm, avec laquelle une surface du noyau est enrobée.

2. Particule colloïdale composite d'oxyde métallique modifiée selon la revendication 1, dans laquelle un rapport en masse de la particule colloïdale (B) à la particule colloïdale (A) est de 0,01 à 0,5.

3. Particule colloïdale composite d'oxyde métallique modifiée selon la revendication 1 ou 2, dans laquelle un rapport en masse de l'oxyde de tungstène (WO₃), de l'oxyde d'étain (SnO₂) et du dioxyde de silicium (SiO₂) dans la particule colloïdale (B) est un rapport en masse de WO₃/SnO₂ de 0,1 à 100 et un rapport en masse de SiO₂/SnO₂ de 0,1 à 100.

4. Particule colloïdale composite d'oxyde métallique modifiée selon la revendication 1 ou 2, dans laquelle la particule colloïdale (A) comprend en outre un oxyde d'au moins un métal M choisi dans le groupe constitué du fer, du cuivre, du zinc, de l'yttrium, du niobium, du molybdène, de l'indium, de l'antimoine, du tantale, de plomb, du bismuth et du cérium dans un rapport molaire M/TiO₂ de 0,01 à 0,1.

5. Sol de dispersion d'une particule colloïdale composite d'oxyde métallique modifiée comprenant la particule colloïdale composite d'oxyde métallique modifiée selon l'une quelconque des revendications 1 à 4 dispersée dans de l'eau et/ou dans un solvant organique.

6. Composition de revêtement comprenant :
un composant (S) ; et
un composant (T1), dans laquelle
le composant (S) est au moins une substance contenant du silicium choisie dans le groupe constitué d'un composé organique de silicium de formule générale (I) :
(R¹)ₐ(R³)_{b}Si(OR²)_{4-(a+b)} (I)
(où chacun de R¹ et R³ est un groupe alkyle, un groupe aryle, un groupe alkyle halogéné, un groupe aryle halogéné, un groupe alcényle ou un groupe organique comprenant un groupe époxy, un groupe acryloyle, un groupe méthacryloyle, un groupe mercapto, un groupe amine ou un groupe cyano et lié à un atome de silicium par une liaison Si-C, R² est un groupe alkyle en C₁-C₈, un groupe alcoxyalkyle ou un groupe acyle, chacun de a et de b est un nombre entier de 0, 1 ou 2, et a+b est un nombre entier de 0, 1 ou 2) et de formule générale (II) :
[(R⁴)_{c}Si(OX)_{3-c}]₂Y (II)
(où R⁴ est un groupe alkyle en C₁-C₅, X est un groupe alkyle en C₁-C₄ ou un groupe acyle, Y est un groupe méthylène ou un groupe alkylène en C₂-C₂₀ et c est un nombre entier de 0 ou 1) et un hydrolysat de la substance contenant du silicium, et
le composant (T1) est une particule colloïdale composite d'oxyde métallique modifiée comprenant une particule colloïdale composite d'oxyde de titane - oxyde d'étain - oxyde de zirconium - oxyde de tungstène (A) ayant un diamètre de particules primaires de 2 à 50 nm et ayant un rapport molaire SnO₂/TiO₂ de 0,1 à 1,0, un rapport molaire ZrO₂/TiO₂ de 0,1 à 0,4 et un rapport molaire WO₃/TiO₂ de 0,03 à 0,15, en tant que noyau, et une particule colloïdale composite d'oxyde de tungstène - oxyde de d'étain - dioxyde de silicium (B) ayant un diamètre de particules primaires de 1 à 7 nm avec laquelle la surface du noyau est enrobée.

7. Composition de revêtement selon la revendication 6, dans laquelle un rapport en masse de la particule colloïdale (B) à la particule colloïdale (A) est de 0,01 à 0,5 dans la particule colloïdale composite d'oxyde métallique modifiée.

8. Composition de revêtement selon la revendication 6 ou 7, dans laquelle un rapport en masse de l'oxyde de tungstène (WO₃), de l'oxyde d'étain (SnO₂) et du dioxyde de silicium (SiO₂) dans la particule colloïdale (B) est un rapport en masse de WO₃/SnO₂ de 0,1 à 100 et un rapport en masse de SiO₂/SnO₂ de 0,1 à 100 dans la particule colloïdale composite d'oxyde métallique modifiée.

9. Composition de revêtement selon la revendication 6 ou 7, dans laquelle la particule colloïdale (A) comprend en outre un oxyde d'au moins un métal M choisi dans le groupe constitué du fer, du cuivre, du zinc, de l'yttrium, du niobium, du molybdène, de l'indium, de l'antimoine, du tantale, du plomb, du bismuth et du cérium dans un rapport molaire M/TiO₂ de 0,01 à 0,1 dans la particule colloïdale composite d'oxyde métallique modifiée.

10. Composition de revêtement selon la revendication 6 ou 7, comprenant en outre au moins un catalyseur de durcissement choisi dans le groupe constitué d'un sel métallique, d'un alcoxyde métallique et d'un composé chélate métallique.

11. Elément optique ayant un film durci formé sur une surface d'un substrat optique à partir de la composition de revêtement selon l'une quelconque des revendications 6 à 10.

12. Elément optique selon la revendication 11, comprenant en outre un film antireflet sur une surface de l'élément optique.
